# EUROPEAN PATENT SPECIFICATION

(11) **EP 1 839 153 B1**
(45) Date of publication and mention of the grant of the patent: **24.09.2008**
(21) Application number: 06707782.6
(22) Date of filing: 20.01.2006
(51) Int. Cl.: G06F 11/34

(54) **NON- INTRUSIVE METHOD FOR REPLAYING INTERNAL EVENTS IN AN APPLICATION PROCESS, AND SYSTEM IMPLEMENTING THIS METHOD**
NICHT EINDRINGENDES VERFAHREN ZUM WIEDERABSPIELEN VON INTERNEN EREIGNISSEN IN EINEM ANWENDUNGSPROZESS UND DIESES VERFAHREN IMPLEMENTIERENDES SYSTEM
PROCEDE NON INTRUSIF PERMETTANT DE REEXECUTER DES EVENEMENTS INTERNES DANS UN PROCESSUS D'APPLICATION, ET SYSTEME DESTINE A METTRE EN OEUVRE LEDIT PROCEDE

(30) Priority: 21.01.2005 FR 0500613
(43) Date of publication of application: 03.10.2007
(73) Proprietor: International Business Machines Corporation, Armonk, New York 10504 (US)
(72) Inventor: VERTES, Marc, F-31470 Saint Lys (FR)
(74) Representative: Bell, Mark
(86) International application number: PCT/EP2006/050345
(87) International publication number: WO 2006/077249

(56) References cited:
- FR-A- 2 843 210
- US-A- 5 214 780
- US-A- 5 363 503
- US-B1- 6 182 086
- BARGA R ET AL: "Improving logging and recovery performance in Phoenix/app" DATA ENGINEERING, 2004. PROCEEDINGS. 20TH INTERNATIONAL CONFERENCE ON BOSTON, MA, USA 30 MARCH - 2 APRIL 2004, PISCATAWAY, NJ, USA,IEEE, 30 March 2004 (2004-03-30), pages 486-497, XP010713807 ISBN: 0-7695-2065-0
- ZANDY V C ET AL: "Process hijacking" HIGH PERFORMANCE DISTRIBUTED COMPUTING, 1999. PROCEEDINGS. THE EIGHTH INTERNATIONAL SYMPOSIUM ON REDONDO BEACH, CA, USA 3-6 AUG. 1999, LOS ALAMITOS, CA, USA,IEEE COMPUT. SOC, US, 3 August 1999 (1999-08-03), pages 177-184, XP010358704 ISBN: 0-7803-5681-0
- MOSER L E ET AL: "Eternal: fault tolerance and live upgrades for distributed object systems" DARPA INFORMATION SURVIVABILITY CONFERENCE AND EXPOSITION, 2000. DISCEX '00. PROCEEDINGS HILTON HEAD, SC, USA 25-27 JAN. 2000, LAS ALAMITOS, CA, USA,IEEE COMPUT. SOC, US, vol. 2, 25 January 2000 (2000-01-25), pages 184-196, XP010371114 ISBN: 0-7695-0490-6

## Description

### Field of the Invention

This invention relates to a method for replaying, from a log file, events within a process belonging to a software application. This method is in particular aimed at the internal events within a process belonging to an application executed in a multi-computer environment.

The field of the invention is that of networks or clusters of computers formed by several computers working together. These clusters are used to execute software applications providing one or more services to users. Such an application may be single or multi-process, and be executed on a single computer or distributed over a number of computers, for example as a distributed application of the MPI ("Message Passing Interface") type or "Shared Memory" type.

In particular, the invention enables to manage the functioning, within the cluster, of such an application termed master or primary, for example by another software application termed intermediate application, which may be integrated within an application of the middleware type. This functioning management may comprise, *inter alia,* the operations of replication, redistribution, reliabilization, or tracing or debugging of all or some of this application, within the primary node or in collaboration with other nodes termed secondary.

### Background art

In order to manage the functioning of an application, for example by forcing or redirecting its behaviour, it is known to simulate a particular development of its environment, by injecting into it data which will simulate the occurrence of certain events. Such a practice may be useful for testing the reactions of this application to certain situations, for example for its debugging. When there is one or more logging files, storing events which occurred previously within a first application, it may be useful to be able to induce these same events in a new application. Such a replay may serve for example to test the behaviour of this new application to discover how it would have performed in place of the old one. If this new application has been started or activated after the occurrence of these logged events, such a replay may enable to bring this new application to a state where it has already taken these same events into account. In addition, if this new application is restored in advance using a replay point state corresponding to a given state of the old application, the replay of the events logged in the old application after the replay point enables restoration of the new application to a state corresponding to that of the old application after the occurrence of these events.

Among the events which occur in the functioning of an application, those which are initiated in an application by data originating from outside this application, i.e. in particular originating from hardware or software elements that it does not control, may be called external events. This may be for example a signal originating from an action on a keyboard, or a message arriving via a communication network.

In order to carry out the simulation or the replay of internal events within an application or one of its processes, it is known to actually recreate the actions or messages which gave rise to them, but this method requires large resources and remains limited to relatively simple situations. It is also known to modifier the value of the memories which are to manage and store the results of these events to give them the value that they would have shown after occurrence of these events. This method however represents an additional complexity in programming this application, which gives rise to costs and the risks of error.

In addition, if an application has not been designed from the start to produce such a record, it is difficult and costly to add such functions to it later, and this constitutes a significant risk of errors.

Some methods are also used by tuning or debugging programs, which enable forcing the functioning of an application from the outside. However, these methods usually require internal intervention in the computer system which executes the application, for example by modifying or adding kernels in the system. Moreover, these system changes require specific system skills, and may induce heterogeneities between a number of network computers, which can be a source of errors and instabilities. More often than not, these disadvantages greatly limit the use of the record and replay principle, mainly to tuning tasks or to isolated configurations, and are unacceptable for extensive and stressed configurations in actual exploitation use.

Furthermore, in the case of resources shared in a non synchronised manner between several processes, the replay of one or more of these processes can contain elements of uncertainty or non determinism inherent in the shared nature of such resources.

When a process during a replay tries to access such a shared resource, the result of this operation can in fact be affected by unforeseen factors, for example the state of progress of other processes also accessing this resource. In addition, when two processes try concurrently to access the same resource, the fact of replaying the two processes together does not always guarantee a result identical to that obtained during the logging or during several different replays. Such a variability can arise for example from differences in the speed of execution between the concurrent processes, or from random factors or differences in the hardware conditions of execution, which cannot be managed directly by a replay software agent or functioning management.

This situation is described for example, under the name of "race conditions", in the publication "Debugging shared memory parallel programs using record/replay" by Michiel RONSSE et al., Elsevier Science, Ghent 2002 (FGCS 19 (2003)679-687).

A known solution is mentioned therein, which consists of maintaining a monitoring of the content of the shared variables, which constitutes a particular programming task as a function of the application to be managed and represents a large work load, both in programming and in processing power. This workload makes this solution costly and inflexible to implement, and its performance is often too low for it to be used under exploitation conditions.

In this same publication, the authors propose a solution which consists of using intrusive methods within the processes in question in order to verify specifically the occurrence of such concurrent access situations, risking the production of a non deterministic result. Such methods comprise for example the addition of a synchronisation semaphore within the functioning of the application which is to be replayed. Such modifications within a replayed or managed application are however complex, inflexible, costly and give rise to the risk of errors. In particular while running the master application, the logging operations represent a work load for the operational node, and can be the cause of a fall-off in performance due to the action of the intermediate application.

US6182086 describes a client-server computer system having one or more clients connected to one or more servers. During request/reply interactions, a client-side application sends a request for services (e.g., read a file, return some information, update a database record, process data, etc.) to the server. A server-side application request program processes the request, prepares a reply to the request, and returns the reply to the client-side application. The server runs a resource manager to log operations and data pages in a manner that enables application and database recovery. Among other tasks, the server's resource manager creates a stable log file that can be used to help recover the client-side application in the event of a system crash. To capture the client-server interaction, the server's resource manager records the reply in the log buffer and commits the reply record to the stable log before the reply is sent back to the client. This results in only one forced logging event for each request/reply exchange. The server further maintains an active application table and a message lookup table to speed recovery. The active application table lists all currently active applications running at the client and server to identify those applications that should be recovered. The message lookup table keeps copies of the logged replies that can be used during client recovery in place of the logged records to avoid searching the server's stable log file. The server further truncates parts of its stable log file when notified that reply log records are no longer needed by the client.

The article entitled "Improving Logging and Recovery Performance in Phoenix/App" by Roger Barga et al from the proceedings of the 20th international conference on data engineering (ICDE'04) Boston, MA, USA, 30 March - 2 April 2004, PISCA TAWAY, NJ, USA, IEEE, pages 486-497 XP 0107 13807, discusses various mechanisms for such techniques for the reduction of logging, and proposes in particular only logging information required to remove non-determinism, and only forcing the log when an event "commits" the state of the component to other parts of the system.

US5363503 describes a fault tolerant computer system employing primary tasks and corresponding backup tasks. The system operates to provide fault tolerant operation even where uncontrolled external events may occur whose time of occurrence may affect task performance. For this purpose, external event data is stored for each external event occurring during performance of a primary task which indicates the event type and the relationship between the occurrence of the external event and the occurrence of a predetermined primary task event, such as a memory access operation. This external event data is sent to each respective backup task along with messages transmitted to the respective primary task. In the event a primary task fails, the backup task will replay the failed primary task by processing these transmitted messages while using the transmitted external event data to redeliver each external signal to the backup task at an appropriate time which will assure that the backup task properly recovers the primary task.

### Summary of the Invention

One objective of the invention is to propose a method which enables simulation or replay of the internal events within an application or one of its processes, in the most transparent manner possible vis-à-vis this application and the system which executes it.

To this end, the invention proposes a method for the execution of at least one application process, termed target process, on a computer, characterized in that it carries out a replay, also termed restart by this target process, of at least one operation termed logged operation, represented by the logging data.

This method comprises the following steps:
- executing, by this target process, at least one program instruction termed replay instruction, initiating an operation termed replayed operation, corresponding to said logged operation and which returns to this target process at least one replay result datum representing a result obtained by said replayed operation;
- performing, by a software agent external to the restart process, a procedure termed forcing comprising taking into account by the target process, instead of the replay result datum, of a forced datum extracted from the logging data and representing for the replayed operation a given result termed logged result.

The use of a forcing procedure controlled from outside the target process enables a replay to be obtained, while limiting functional intrusions by the agent process performing this forcing.

Advantageously, the target process executes the replay instruction on its own initiative by moving at least one program execution pointer within at least one executable file.

More particularly, the method according to the invention comprises in addition a step of interception of the replay instruction or of the replayed operation that it initiates.

It is thus possible to leave the application process to progress on its own from its original executable files. The invention thus enables an even greater reduction in intrusions into its functioning and also into functional configuration. In addition, the invention enables such a replay function to be implemented less intrusively, since the mechanism of progression of the restart process execution pointer does not need to be systematically provided for within the forcing agent or the application which manages this replay.

In order to replay a sequence comprising a plurality of operations, the method according to the invention uses an ordered set, termed log, of logging data, representing a succession of logged operations for executing at least one target process by carrying out a replay of said succession of logged operations.

According to an advantageous particularity, the interception step comprises in addition a log data test phase to verify if it contains logging data representing a logged result corresponding to the replayed operation, the forcing step only being carried out if this log contains such a logged result.

The invention thus enables to reduce the workload required for operations which do not require.

In particular, when the replayed operations comprise both deterministic operations and non deterministic operations, the forcing phase may advantageously not be applied to at least one of said deterministic operations.

In fact, numerous operations internal to the computer and/or its software system have a deterministic character, i.e. they give a result which is dependant only on the state of the process and the resources it uses. By replaying, starting from the same state, all the operations of this process or all those which are of a given type or affect only certain specific resources, a replayed sequence brings the restart process naturally into the same state as that of the logged process. When the restart process of its own accord executes a new instruction performing a determinist operation, the result obtained will necessarily be identical to that of the corresponding operation for the logged process. It is thus possible to limit the workload induced by the logging and/or the replay by not logging and not replaying operations which are identified as determinist from the point of view of the sought objective.

This log may be organised for example according to one or more given processes, and constitute a global view of all the operations to be replayed, according to one or more points of view which may be chosen depending on requirements.

The method according to the invention may thus use a log representing the set of operations of at least one given type performed during the execution of a process termed logged process for executing a target process carrying out a replay of said logged process.

In particular, the method may carry out a replay, by at least one target process, of all the non deterministic internal events which have occurred during at least one part of the execution of said logged process.

By using the method to perform a replay of a logged sequence comprising all the internal events on a particular part of its execution, and by starting from an identical state, the method enables a state identical to that of the logged process to be obtained for the target process and the resources concerned.

Advantageously the step of testing the log relates to the position of the replayed operation within the execution of the target process compared with the position, within the execution of the logged process, of the first operation non yet replayed for which the log contains data representing a logged result.

The restart process operations may thus be monitored more simply in relation to the log, by incrementing a sequence or position number which will determine whether or not a forcing phase is required during replay.

Alternatively, or in combination with the use of a log grouping together the operations forming part of a process, the invention also proposes to implement the replay process by utilising a log representing the set of operations of at least one given type applied to a shared resource termed logged resource. From this log, the method is used to perform a replay of said logged operations by at least one target process termed restart process, this restart process accessing a resource termed target resource, corresponding to the logged resource.

In particular, the method according to the invention may be applied to at least one operation replayed by a target process and comprising a pre-emptive attribution request for at least one target resource of shared type. The forcing step may then comprise the following steps:
- test phase verifying if the logged result of the next logged operation non yet replayed for this resource corresponds or does not correspond to an attribution to said target process;
- whenever said test is negative, the target process is put on hold and said test is repeated until a positive result is obtained.

The invention thus enables simplification of the implementation of replay functionalities applied to resources shared between several processes, while preserving on replay the access order of these different processes noted during logging. This feature applies for example to operations of the of pre-emptive type, such as attribution of a semaphore or a shared memory zone.

According to a particularity of the invention, the replay instruction comprises a call to a routine, termed original, external to the executable file, and the interception step then comprises a call to a routine termed, instead of said original routine, with this modified routine performing or initiating the forcing operation.

For example in the case of instructions calling a dynamic library loaded by the system, the invention proposes to perform the interception by loading an additional module or library in the system, to which the executable file of the application will call as a priority. As disclosed in patent application FR 2 820 821, this module may then be loaded dynamically by an functioning management agent or application, and will comprise the modified routines performing different tasks in addition to the content of the original routine.

Advantageously, the modified routine comprises at least one instruction executed within the software system and comprises a call to at least one software agent, termed replay, executed in the user memory space of the computer of the target process computer and managing the implementation of the replay by the target process.

The use of one or more replay agents functioning in the user memory space, for example as application processes within an functioning management application, enables implementation of these functionalities in a flexible and modular way while limiting modifications or interventions in the system space, and doing so transparently in relation to the target application.

According to one feature, the modified routine comprises a test instruction verifying if the instruction which called it is executed in the context of a replay or not, this test affecting the call to the replay agent.

In a variant, the modified routine may also comprise a test instruction verifying if the instruction which called it is executed in the context of a logging, and in this case initiating a call to a logging agent.

Such a system module comprising the modified routines used to execute the replay may thus be installed and/or loaded on one or more computers or nodes of the network without disturbing the functioning of the various applications which are executed there besides any replay or logging mode.

Within the scope of an improvement in the simulation or replay functionalities, another objective of the invention is to improve the management of the functioning of an application or of at least one of these processes.

The method according to the invention then performs an functioning management of at least one application process termed logged and comprises the following steps:
- recording, and storage in the form of logging data, of data representing events of at least one given type which have occurred during the execution of said logged process from a given point termed restart point and up to a point termed interruption;
- from a restart process in a state corresponding to the restart point state of the logged process, replay by said restart process of said events from said logging data, thus bringing the restart process into a state corresponding to the state of the logged process at the interruption point.

According to a particularity of the invention, the logging data represent all events of one or more given type occurring in the logged process since a given point in its execution, termed restart point. The replay step is then applied to the restart process starting from a state corresponding to the restart point state of the logged process, and the replay sequence restores the restart process to a state corresponding to that of the logged process after the logged sequence.

According to the invention, the state of the logged process at the restart point may in particular be captured and stored in the form of restart point data, which is used for restoring the restart process into the restart point state before applying the replay phase to it.

The method according to the invention may in particular be used to perform a replay of a succession of events comprising external events as well as internal events. The invention then proposes carrying out the replay of the external events by injection or simulation of each of these external events within the restart process. The internal events which follow each external event in the execution of the replay are then executed by the restart process, under its own initiative in reaction to the occurrence and/or the processing of the external event which immediately precedes them. The restart process then performs the replay of at least one logged sequence of internal events in reaction to the occurrence of an external event triggered by an external replay agent.

Within the functioning management functionalities, an objective of the invention is also to improve the tools for debugging or for analysing or for reproducing at least one part of the functioning of an application, or of at least one of the processes of this application.

The invention therefore proposes to use the functioning management to perform a monitoring, which may be controlled, of the execution of an application, termed traced application, for example within the context of the debugging of this application. Such monitoring is applied to at least one process of the traced application and comprises the following steps:
- starting from a given state of the traced application, logging of a plurality of successive and contiguous logged sequences constituting a studied sequence within the execution of the traced application;
- production of a controlled succession of replay steps producing a controlled execution of the rest of the logged sequences, thus producing a replay of the studied sequence according to a controlled rhythm.

Within the functioning management functionalities, an objective of the invention is also to improve the tools for reliabilization of the functioning of an application, or of at least one of these processes.

Such reliabilization may be obtained in particular through the maintenance of improved continuity of operation of the application from the point of view of the services which it provides to its clients. On a failure, this continuity may be total, i.e. the clients do not have to restart the least operation to obtain the same service. Such continuity may also be partial, i.e. by reducing as far as possible the number and/or complexity of the operations which clients will have to repeat or to do in extra to obtain the same service or a part of this service.

In this context, the invention proposes to implement the functioning management method to reliabilize the functioning of a first application, termed managed reliabilized application, executed in at least one primary node, termed operational node, of a communicating or even redundant multi-computer architecture, termed cluster. This reliabilization comprises a restoration, into a state corresponding to the state of the reliabilized application at a restart point, of a second application termed stand-by, in a second cluster node, termed standby node.

Depending on the embodiments or depending on the situations, this restoration may be done in the absence of any failure and as a preventive measure, or be implemented after detecting a failure and based on data stored previously.

This reliabilization moreover comprises the following steps:
- logging the execution of the reliabilized application since the restart point, and storage, outside the operational node, of logged events in at least one log file;
- detecting a failure within the operatonal node;
- using said log file to replay in the standby application the events logged in the reliabilized application since the restart point, thus restoring the standby application into a state corresponding to the state of the reliabilized application after the last logged event.

The invention also proposes a system comprising a network of computers working together and including at least one node implementing such a replay method.

More particularly, the invention proposes such a network using an application of the middleware type implementing the method according to the invention in order to manage the functioning of at least one application executed within said network.

The invention is applicable in particular within an environment of the "middleware" type, for example managing a network and/or applications distributed over one or more networks.

### Brief Description of the Drawings

Other features and advantages of the invention will become apparent from the detailed description of a method of embodiment, which is in no way limitative, and the appended drawings in which:
- figure 1 is a symbolic diagram illustrating the functional architecture of an intermediate application implementing the invention;
- figure 2 is a symbolic diagram summarizing the organisation for logging the events on an operational node;
- figure 3 is a symbolic diagram illustrating the operation of the logging of external events from an operational node and its backup on a secondary node;
- figure 4 is a symbolic diagram illustrating the operation of the logging of internal events from an operational node and its backup on a secondary node;
- figures 4a and 4b illustrate two versions of the operation of a mechanism for the aggregated transmission of logging data from a sequence of internal events;
- figure 5 is a symbolic diagram illustrating the replay functioning of logged external events while updating a restart application on a secondary node;
- figure 6 is a symbolic diagram illustrating the replay functioning of internal events while updating a restart application on a secondary node;
- figure 7 is a symbolic diagram of the use of an interposition technique, during a call to a system routine, to insert supplementary instructions into the execution of said routine;
- figure 8 is a time diagram illustrating the progress of an internal event replay for two concurrent processes, using an addition of supplementary instructions in a system routine to obtain the same progress as during logging;
- figures 8a and 8b illustrate the operation of logging and replaying internal events so as to process only non-deterministic events;
- figures 8c and 8d are diagrams illustrating the optimization of internal logging by heuristic compression and decompression respectively;
- figures 9 and 10 are symbolic diagrams illustrating an example of optimization, by heuristic compression, of the logging of non-deterministic internal events during different scheduling of internal events between two external events, in several simultaneous processes on an operational node;
- figure 11 is a symbolic diagram illustrating the non-determinism of a reading operation by the "read" routine in a system of the "Unix" type;
- figure 12 is a symbolic diagram illustrating one behaviour of this same routine, made deterministic by dynamic semantic changing;
- figures 13 and 14 are symbolic diagrams illustrating the non-determinism of an data receiving operation in the application, from two contending channels of the operating system, by the "select" and "poll" routines in a system of the "Unix" type;
- figure 15 is a symbolic diagram illustrating one behaviour of this same routine, made deterministic by dynamic semantic changing;
- figure 16 is a diagram illustrating the interactions used by a semantic change.

### Detailed Description of the preferred embodiment

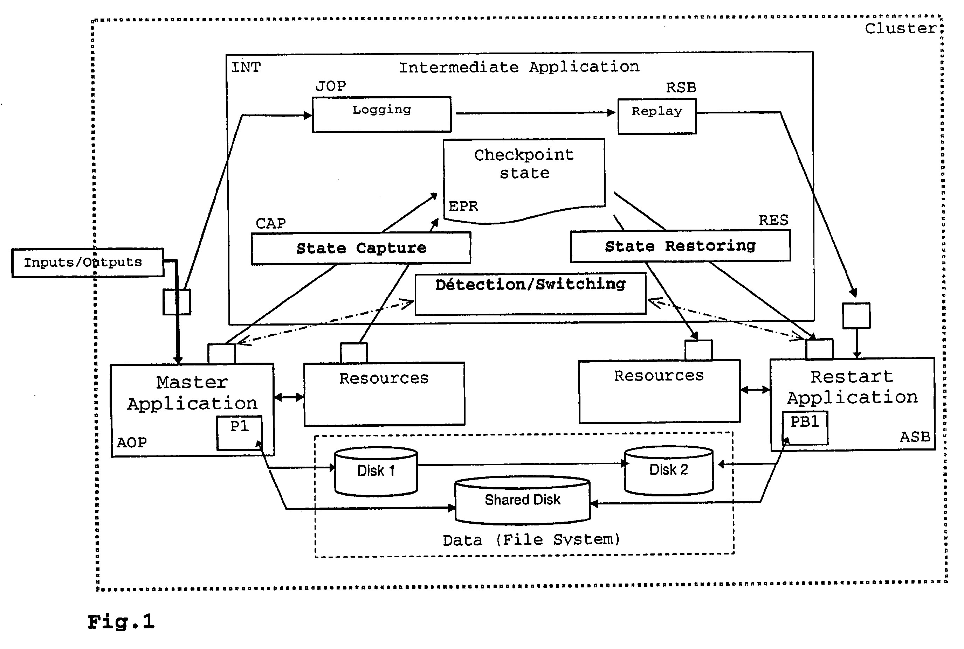

Figure 1 illustrates the functional architecture of an intermediate application implementing the invention;

Within a cluster, an AOP master application, for example a transactional application, provides a certain number of services to users or clients, in particular by input and output of data in different forms. Within the cluster, this application can be single or multi-task (multi-process or multi-threads) and uses a certain number of resources. In particular, these resources can be data, for example in the form of spaces of work memory, shared memory, or data files, or can be state indicators, for example, in the form of semaphores or mutex.

The master application is executed on one or more computers forming a node, termed the operating node OP or the primary node. A functioning management application, termed the intermediate application INT, is executed in one or more parts, in one or more cluster nodes.

According to the embodiments, this intermediate application can deal with different aspects of the master application functioning within the cluster. Such an intermediate application INT can in particular work in parallel with an intermediate cluster management software of the "middleware" type, be integrated with such a middleware, or be itself a form of middleware.

Through the functionalities described here, the intermediate application INT can be used in particular to produce a replication of all or part of a master application in the cluster. The replication of a master application can provide another application which will then be termed replay application.

The functionalities described here, in particular in connection with such replication, also allows the implementation of reliability features for the master application, or tracking or studying this application to implement "debugging", adjustment or development tasks. A use for reliability implementing will include, for example, the restart application as a backup or replacement application. A use in tracking or debugging will comprise, for example, a logging JOP and/or a replay RSB of events, as described hereafter, according to a slowed or controlled rhythm, of logged events.

The embodiments applied to reliability features are therefore described just here as non-limitative examples.

At different points when running the AOP master application to be made reliable, termed restart points or "checkpoints", regularly or on event, the intermediate application INT creates or updates at least one restart application ASB executed on a node termed secondary, or "stand by" SB.

This restart application is created or updated, for example by a method of replication by capturing and restoring the application, termed restart method. Said method of replication comprises capture operations CAP of the state of the master application, followed by restoration operations RES of this state, i.e. the state of its processes and of all or part of the resources which it uses.

During such a capture operation CAP, the state of the AOP master application is backed up in the form of data forming a checkpoint state EPR.

Some of the master application's resources, in particular data files representing a large volume on means of storage such as hard disks, can be updated on-the-flow into several copies on several different storage media, constituting restart data files on mirror disks or shared disks. In this case, the data forming a checkpoint state can comprise information constituting references to these restart data files.

When a checkpointing or a replication is based on a capture state including all the execution environment and the master application resources, either directly or by references to replay data files, said checkpoint or said replication can be termed holistic.

From the data of a checkpoint state EPR, the intermediate application INT can implement a restoration RES, by creating or updating a restart application ASB. Said restoration can be implemented regularly or on initiating event, for example at the request of an administrator or a mechanism for managing the cluster workload. This restoration can also be implemented after a failure of the operational node, detected by means of detection, the restart application then being capable of being used as a permanent or non-permanent backup application.

If necessary, the intermediate application organizes a switching of all or part of the master application's services to one or more restart applications. In order that this switching is made transparently for the clients, the intermediate application can use a method of interposition through a "metaprocess" managing virtual network addresses, and implementing a migration of clients' connections from the master application to these restart applications. The intermediate application can also use a method of interposition through a "metaprocess" managing virtual process identifications (virtual PID), allowing the communications for these restart or clone processes to be restored identically to those of their original processes.

These techniques can, for example, be those described in patent FR 2 843 210.

A restoration followed by a partial or total switching can also be implemented besides any fault, for example to distribute the workload of the master application or allow maintenance of certain elements of the operational node or network.

In order that this failure and/or switching are as transparent as possible from the point of view of the clients, the intermediate application records all or part of the events affecting the master application several checkpoints, and backs them up in the form of one or several "logs".

On completion of a restoration from a checkpoint state, the restart application is in the state of the master application when establishing said checkpoint. Starting from this state, the intermediate application uses the logs that were backed-up since said checkpoint, to cause the re-execution or replay, by the restart application, of the events which have taken place in the master application since this checkpoint. This re-execution, or replay, is implemented so that the restart application reaches the state where the master application was after the last backed-up event, for example, to a state immediately preceding a failure.

The intermediate application can also implement a virtualization of some resources as regards the restart application, for example when these resources have changed since the restored checkpoint, in order to allow it to run its re-execution without interfering with the actual state of these resources, as long as it has not returned to a state corresponding to said actual state.

Among the events to be logged on the operational node and to be replayed on the secondary node, there is a distinction between events termed external and events termed internal.

External events are defined as outside the application in question, in the occurrence the master application. Therefore, external events are defined as those which are initiated in the application by actions or information coming from outside this application, i.e. in particular coming from hardware or software elements which it does not control. These external events can take the form of data or signal inputs, for example hardware interface inputs, such as keyboard or mouse, or data arriving via the network and coming from the outside world, such as a client in the case of a client-server application. Most frequently, these external events cannot be deduced or recreated from the environment of the application. These external events are logged by the master application and can be replayed by the restart application.

If the application in question, sometimes termed the target application, incorporates elements executed on a node other than the primary node, the events in said application but outside the primary node can also be processed as external events.

Internal events are defined as internal to the master application or to the node which is executing it, for example in the form of data or signal inputs received by a process of this application and coming from another process which is also part of the application. These internal events can be received directly or through software mechanisms or agents outside the application but part of the node executing it, for example through partner applications or part of the operating system, such as the "Inter Process Communication" (IPC) agent from a system of the Unix type. These internal events can comprise "message passing events", for example coming from "pipes", "signal queues" or "message queues", or interfaces of the "socket" type. These internal events can also comprise "shared memory access" events, for example semaphores or "mutex".

While an application is running, internal events are particularly numerous, for example compared with external events. Moreover, internal events correspond to rapid execution, or low latency, operations, in particular compared with the time for a logging operation, above all when the latter includes a network transmission or storage on a permanent medium such as a hard disk. For example, a logging operation can represent a duration 10 to 10,000 times greater than that of an internal event.

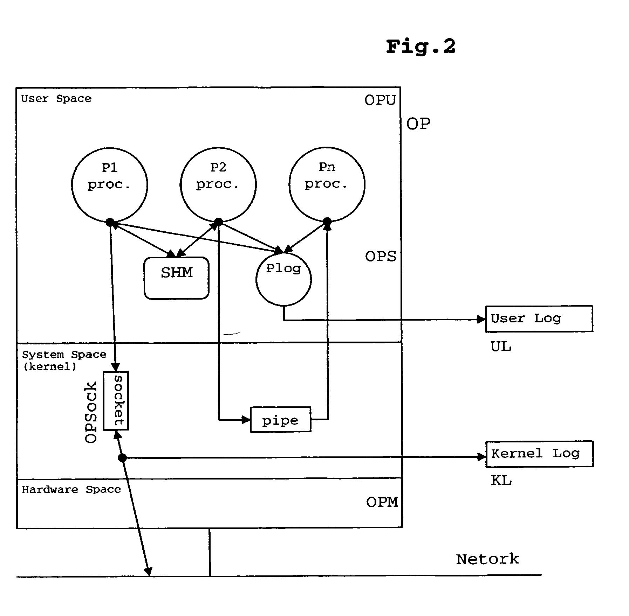

As illustrated in figure 2, the logging JOP of events that have occurred since a checkpoint is implemented differently for external and internal events, and backed up separately.

An operational node OP, connected to the cluster by a network, comprises a hardware space, supporting a system space, which itself supports a space termed "user space". The hardware space, which can be defined by reference to one or more of the lowest layers of the OSI model, comprises in particular hardware devices for executing the process, actual memory and processors and communication, such as network cards. Typically, many external events transit via the hardware space, in the form of communications passing via the network.

The system space, which can be defined by reference to one or more of the intermediate layers of the OSI model, includes, in particular, the operating system. This system space comprises various software mechanisms and agents managing communications from applications with the outside world via the hardware space, for example in the form of sockets in a Unix system, or managing communications between several application processes, for example in the form of a "pip" and IPC in a Unix system.

The user space, which can be defined by reference to one or more of the topmost layers of the OSI model, comprises processes which are part of the various applications executed by the node, such as the master and intermediate applications. Several processes P1, P2, and Pn, which are part of one or more applications, for example the master application, are executed in this user space. These processes exchange information with the outside through one or more "sockets" from the system space, and between themselves through one or more "pipes" from the system space. Some of these processes also concurrently access "shared memory" resources SHM , in a way managed by state resources (not represented),.

When setting up a checkpoint, the intermediate application can start up one or more new logs, or record a "checkpoint mark" in the running log(s).

It should be noted that the term "user", in particular in the case of the "user space" or the internal events log ("user log") (described later), is here to be taken to mean "system space user". This means that the user space is accessible to applications using the node and its operating system, even if this user space is not directly accessible to persons or computers communicating with these applications, and which will then be defined as "clients".

External events are backed up in a log, made of one or more files KL, termed "kernel log" (c.f. figure 2). To implement this backup, the data representing these events is read, after its arrival in the node, at a low level of the layers of the OSI international classification. Preferably, these events are read in the system space, for example in the kernel, before being demultiplexed and before being processed by the "protocol stack". As this logging is made directly from inside the system space, it is possible to avoid the losses of performance caused by writing to a buffer and unnecessary context changes.

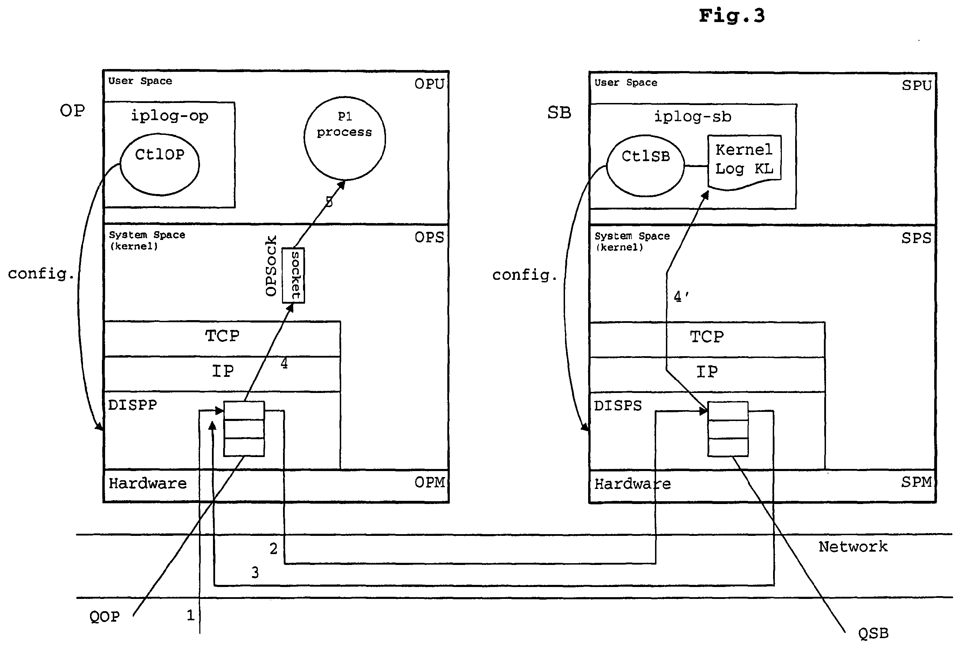

Figure 3 illustrates in more detail the operation of logging external events, in particular when they take the form of TCP-IP protocol messages. The master application is executed on the operational node OP and comprises at least one process P1. The intermediate application comprises first an "IplogOP" module, comprising a control process CtlOP, which is executed on the operational node OP, and second an "IPlogSB" module, comprising a control process CtlSB, which is executed on a secondary node SB. On each of these nodes OP and SB, the control process configures and manages the operation of a software mechanism or agent "disp" (DISPP, DISPS), which is executed in the system space of the node in question.

In the case of a system of the Unix type, said "disp" agent comprises in particular a kernel module, loaded into the system space. This kernel module is loaded dynamically into the kernel when the system is booted, or even before launching the application to be managed or made reliable. From the point of view of the functional structure, for example with reference to the OSI layers, this module is inserted under the IP layer, in particular between the IP layer and the "network device" layer depending on hardware space.

This "disp" agent may intercept and store messages, received from the network and addressed to the TCP layer, in message files QOP and QSB, operating by sending or receiving as required.

In step 1, a message coming from a client, addressed to the process P1, is received by the "disp" agent in the system space of the operational node OP, which retains it in a message queue QOP.

In step 2, a logging message, representing the message received, is sent by the "DISPP" agent from the primary node to a secondary node SB, where a DISPS agent receives it in a received message queue QSB.

The operational node OP may in particular communicate with one or more secondary nodes SB over a separate local area network (LAN), by using a network device different from that used to communicate with clients.

Several of these secondary nodes can also subscribe to an address of the "multicast" type according to the RFC 1112 standard, for communicating with the operational node OP. The use of a multicast address, for example defined by the RFC 1112 standard "Host Extensions for IP Multicasting") as an IP address in the range situated between 224.0.0.0 and 239.255.255.255, thus allows the operational node to send only once messages addressed simultaneously to a number of secondary nodes, without overloading the network with a transmission which would be sent to all the addresses in the network.

Preferably, the logging message sent from an node OP to another node SB should contain all of the packet or packets received at the physical layer level, in their original form. That is to say, it contains all the data addressed to the master application, as well as network data such as Ethernet, IP, and TCP headers.

In step 3, the secondary node SB sends an acknowledgment message to the operational node OP.

In step 4, on the operational node OP and once the corresponding acknowledgment has been received, the message is retrieved from the message queue QOP and sent to the TCP layer.

In a parallel step 4', the secondary node SB records the message in a log, for example the kernel external events log KL, and takes it out of the received message queue QSB.

In step 5, in the operational node OP, the P1 process of the master application reads the message in the "socket" element and then processes it for carrying on with its operating.

As the master application only considers the incoming message after acknowledgment by the secondary node SB, the invention ensures that an unlogged message cannot be processed by the application. For example, such an unread message can therefore be retrieved by the TCP protocol's retransmission functions.

If a checkpoint mark is to be set in the kernel log, the control process CtlSB in the secondary node records there the data representing said checkpoint mark.

The content of an internal event depends directly on the local environment, i.e. within the node, on the content of the preceding external events, and on questions of scheduling within a processor or managing a number of processors or computers working in parallel within a node. De facto, in most cases, only the order of these events influences the subsequent behaviour of the application.

The intermediate application INT is confined to logging the order of these internal events, without memorising the detail, or the parameters, of each of them. This choice thus allows the volume of data to be stored for the logging JOP of these internal events to be reduced, and thus to minimise the loss of performance occasioned in the operational node and the master application by this logging.

Internal events are backed up in a log, made of one or more files, termed "user log" (see figure 2).

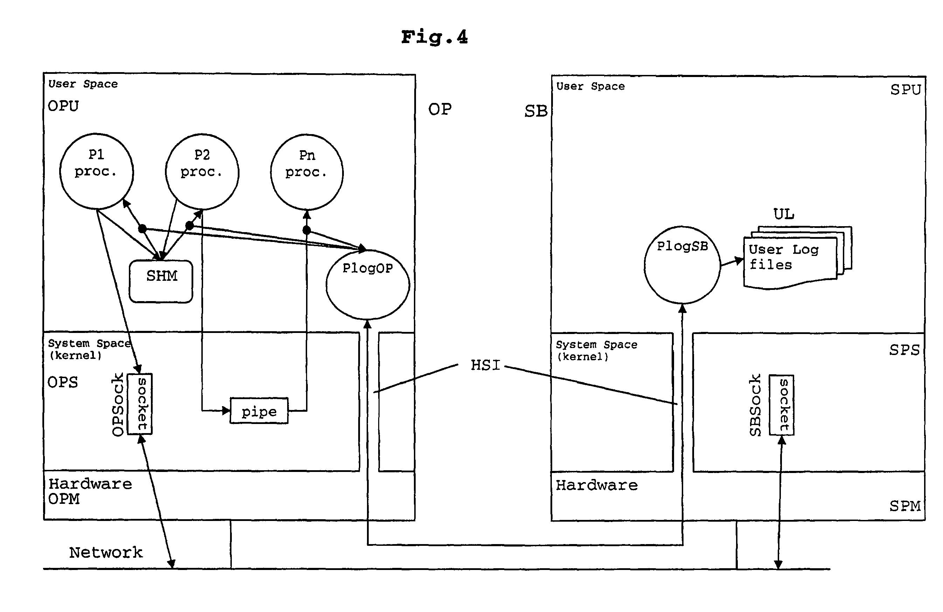

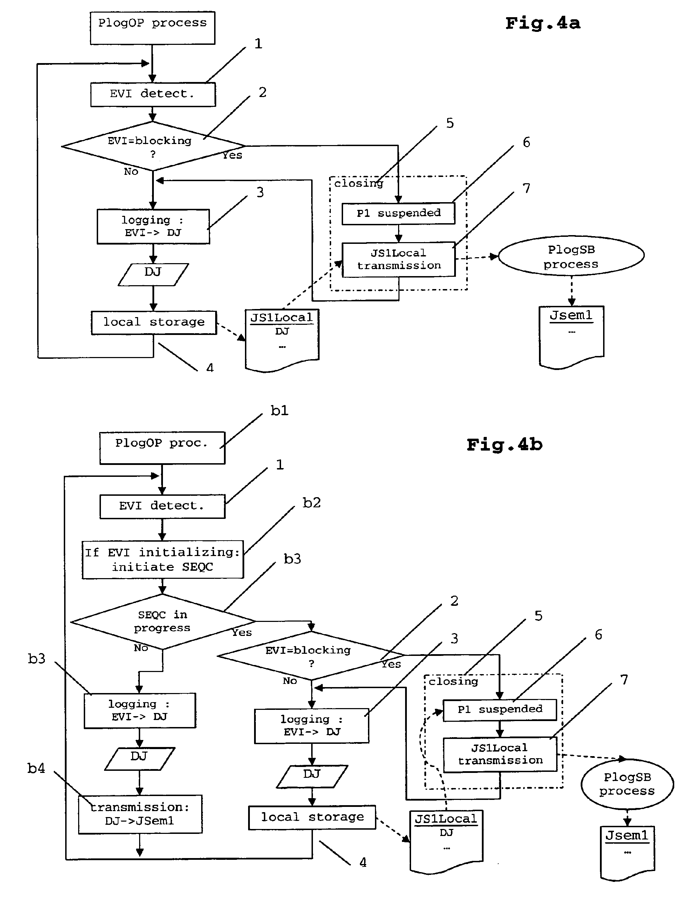

As illustrated in figure 4, the primary nodes OP and secondary nodes SB communicate via a hardware and/or software high speed interconnection (HSI). Said HSI system allows data transfers between the primary node's OP logging process PlogOP and a secondary node's SB logging process PlogSB, and this directly by bypassing all or part of the operating systems of these two nodes. Such an HSI system can be implemented following known means, by using existing network interface controllers, such as network cards and their control software. Such an HSI system may also be implemented by using high performance network devices, in parallel or in combination with the rest of the network internal to the cluster.

Internal events are scrutinized and read in the operational node's OP user space by a logging process PlogOP of the intermediate application. This then sends to the secondary node's logging process PlogSB, via the high speed connection system HSI, the data representing these internal events and/or their order of occurrence. This data is then backed up in one or more files forming the "User log".

If a checkpoint mark is to be set in the "user log", the secondary node's control process PlogSB records there the data representing this checkpoint mark.

Preferably, the logging process PlogOP reads the internal events on their "return", i.e. when its results have already been produced but not yet sent to the master application process which requested its execution.

This reading is done, for example, by intercepting Input/Output system calls, for example an access to a "pip", and the responses to operations locking shared memory segments SHM.

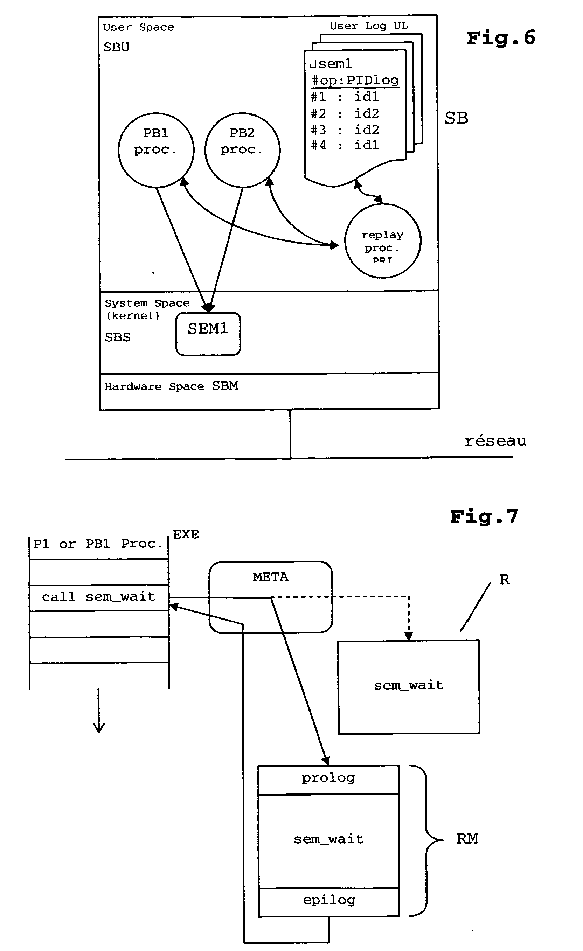

This interception may be implemented by inserting recording instructions ("recording probes") in the content of all or part of the routines provided by the system and called by the application. These recording probes are added in the form of additional instructions, forming for example an epilogue to the end of the original routine code as illustrated in figure 7, by using a dynamic interposition technique by "metaprocess", as specified later.

The internal events log, the "user log", thus comprises a succession of records each representing an internal event. These events can be logged in a single file, and will then comprise an identification of the resources and/or processes in question. They can also be recorded in several files, for example one file per resource, or per process, or per combination of the two.

For a file corresponding to a given resource, each of these records comprises, in particular, the following fields:
- a sequence number for the event in question, in a sequence specific to each resource, and which is incremented at each new event or operation on said resource;
- a timestamp information, representing for example the elapsed time since the last event concerning this resource;
- a type of event, for example "read" or "write" for an input/output resource ("I/O"), or "lock" or "unlock" for a semaphore;
- a result, i.e. a value in case of an input/output operation or an identification of a process obtaining exclusive access in case of a "lock".

This result will in particular be used to implement a resources virtualization, for example during the replay of the events in a log by a restart or backup application restored in a secondary node. The stored result will then constitute a value to be forced as the result of an I/O operation request made during the replay, or a virtual identification of a process (virtual PID) in case of a task obtaining a "lock".

In order to limit losses in performance due to sending logging data from the operational node to one or more secondary nodes, it is useful to aggregate the sending of data representing several internal events.

For this, the intermediate application may use a combination of several different methods, for example implemented by the logging process PlogOP, termed primary, of the operational node OP.

It is understood that the internal change of an application is unimportant as regards to the outside world, for example concerning its clients, as long as this operation does not send anything to the outside world. A restart application, restored from a checkpoint and a log, will not cause any interruption of its services to the outside world if said log does not include internal events which have occurred since the last external message sent by the logged master application.

According to a first way, this primary logging process PlogOP sends internal logging data as it occurs, but in asynchronous mode and according to the transmission availability, without blocking the master application functioning, as long as the latter does not send external messages. On the next sending by the master application of an external message, means of detection warn the primary logging process of this, which then blocks or suspends the sending of this external message, and possibly the execution of one or more of the master application's processes. This blockage is then maintained until all the internal logging data has been sent trhough this asynchronous transmission, or until it has received a receipt for said data.

According to a second way, the primary logging process PlogOP stores in a buffer or "cache" the internal logging data representing several successive internal events, without sending these immediately to the secondary node's logging process PlogSB. It sends these only when their number reaches a set threshold, or when the application must send a message, termed external, to the outside world, for example data or a signal addressed to a client or to an external process. During the next sending by the master application of an external message, means of detection warn the primary logging process of this, which then blocks or suspends the sending of this external message, and possibly the execution of one or more of the master application's processes. This blockage is then maintained until the primary logging process has sent to the secondary node the remaining logging data in the cache, or until it has received a receipt for this data.

In these two ways, the fact of having to send an external message constitutes an outgoing event, which constitutes a type of event that can be termed blocking, i.e. which requires the logging of preceding events to be closed before execution of this event. According to the embodiments, other types of event can be chosen as blocking, most frequently in addition to external outgoing events.

Figure 4a illustrates the operation of an events log with aggregation of the logging data DJ for a number of internal events EVI before transmission outside the primary node OP.

In a step 1, the logging process PlogOP detects, during the running of a logged process P1, the occurrence of an event EVI.

In a step 2, the logging process PlogOP checks whether the detected event EVI is of a type that must be considered as blocking.

In a step 3, if the event EVI is not of a blocking type, the logging of this event produces a logging data item DJ.

In a step 4, this logging data item DJ is stored in primary node OP in an ordered structure constituting a buffer log JS1Local, before waiting for the detection of the next event.

In a phase 5, if the detected event EVI is of the blocking type, the logging process PlogOP implements a phase closing the running sequence of internal events previously logged in the buffer log JS1Local.

This phase 5 includes a step 6, where the execution of the logged process P1 is suspended pending satisfactory execution of the closure phase 5.

This phase 5 also comprises a step 7, where the primary node's logging process PlogOP sends the contents of the buffer log JS1Local to the secondary node's logging process PlogSB, which stores it in the log JSem1 concerning the detected event EVI, followed by the preceding data. The primary logging process PlogOP then continues the direct logging of the detected event EVI, with restarting a buffer sequence if this event is also an internal event.

In a variant illustrated in figure 4b, the buffering of internal events can be initiated by types of event possibly different from events of the blocking type. This then involves events of the initiating type. A single type of event can be chosen as being a blocking-only type or an initiating-only type, or both.

In this variant, the step 1 of detecting an event is followed by a step b1. In this step b1, if the detected event EVI is of a type considered as initiating, the primary logging process PlogOP checks whether a current sequence SEQC for logging in buffer memory is in progress, and initializes one if this is not the case.

In a subsequent step b2, it tests whether such a current sequence SEQC for logging in buffer memory is in progress for the detected event EVI.

In a step b3, if no current buffer sequence SEQC is active for this EVI event, its result is logged as a logging data item DJ.

In a step b4, said logging data item DJ is sent to the secondary logging process PlogSB, which stores it following those preceding in the log file JSem1 concerning the detected EVI event, following the preceding data. The primary logging process PlogOP then waits for the detection of a new event.

Following step b2, if a current sequence is active for the detected event EVI, the logging of this event continues as in figure4a.

When the intermediate application wants to switch all or some of the services from the master application to a restart application, it begins by restoring this restart application in a secondary node out of a checkpoint state, and then implements a replay of the events logged since this latter checkpoint.

In particular, for a master application which is event driven, i.e. on initiating events (external), for example a transactional application, the the restoration replay is implemented differently for external and internal events.

Such an functioning means, for the application, that it comprises at least one process which can remain to wait to receive an external event, and at this point react by implementing operations comprising internal events

The replay thus comprises an active supply to the application of logged external events, and a passive response providing logged answers in response to internal events, which are created by restart application itself during the replay.

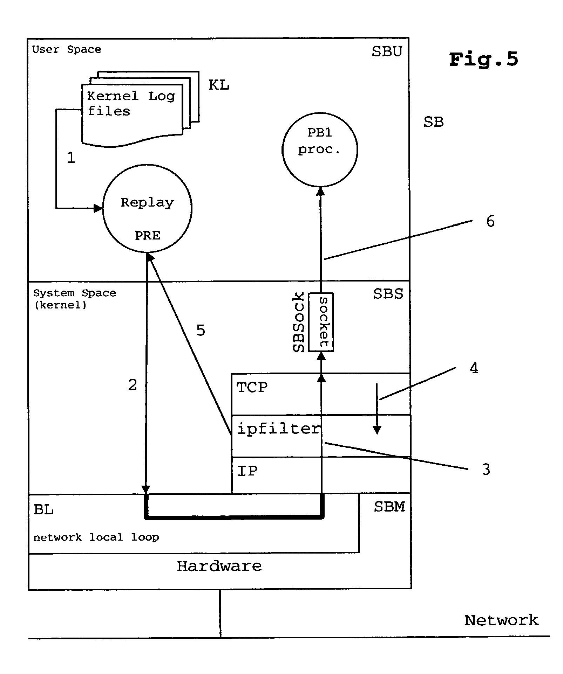

Figure 5 illustrates the operation of the replay RSB of external events of the TCP message type, logged in one or more files KL constituting the external or "kernel log".

Said kernel log KL is used by a replay process PRE, belonging to the intermediate application and being executed in the user space of the secondary node SB, for re-injecting previously logged TCP messages into a process PB1 of the restart application.

To implement this re-injection, the intermediate application INT comprises or uses a software mechanism or agent which is interposed in the TCP message receipt layers, for example in the form of a software mechanism or agent "ipfilter", comprising a functional kernel module between the IP and TCP layers. The secondary node also includes a local loop function for the BL network, the access to which is "mapped" by an interface into the system, in order to be accessible to the user space processes. This loop BL can include, in particular, a physical device within the hardware space, which allows it to re-inject the data at the bottom of the IP layer, as opposed to virtual loop-back interfaces which are software implemented in an operating system, for example Unix.

In a step 1, the replay process PRE reads a message logged in the files of the "kernel log" KL.

In a step 2, the replay process PRE injects this message into the of the network local loop BL.

In a step 3, this message is received by the IP layer, which sends it, via the intermediary of the "ipfilter" agent, to the TCP layer for processing.

In a step 4, if the TCP layer sends a receipt to the network, the latter will be filtered or blocked by the "ipfilter" agent.

In a step 5, after having sent the message to the TCP layer, after having received its receipt if any, the "ipfilter" agent signals to the replay process PRE that the message has indeed been received or processed by the TCP layer.

In a step 6, the restart application process PB1 receives the message from the TCP layer, and implements asynchronous reading of the packet(s) contained in it.

Throughout the replay, the "ipfilter" agent isolates the restart application from the network, at the same time preventing all external messages from arriving up to the TCP layer and, at the same time, preventing all messages sent by the restart application from arriving at the IP layer, transparently as regards to this application.

Within the replay application, to implement the replay of internal events occuring between two replayed external events, the intermediate application allows the restart application to run by itself, at the same time virtualizing for it the concerned resources, thus implementing a passive replay. A replay process PRI then detects each operation constituting an internal event as regards to a given resource, and thus forces said resource to adopt the behaviour which has been logged, hence sending to the replay application the result stored for said event during this logging.

Figures 6 to 8 illustrate a replay RSB example of an internal event, in a case where it comprises , from two processes PB1 and PB2 of the restart application, an operation of requesting a semaphore SEM1 so as to obtain mutual exclusion access to a shared resource, for example a shared memory area.

During a restoration on a secondary node SB, these two processes PB1, PB2 are implementing a replay based on files constituting a user log. During their replay, the execution of the restart application causes each of these processes to place a call to a single semaphore SEM1, to which corresponds a log file JSEM1 included in the internal events log - the "user log".

The detection of these access operations and presetting their response are implemented by adding additional instructions in the content of all or part of the routines provided by the systems and called up by the application, using a technique of dynamic interposition by "metaprocess". Such a technique can be, for example, that described in patent FR 2 843 809. In particular, these instructions can be aggregated before the code implementing the functions from the original routine and thus form a prologue, or be aggregated after this code and form an epilogue.

Figure 7 thus illustrates the insertion of a prologue and an epilogue within a routine R, thus giving an amended routine RM. In this example, it should be noted that the same amended routine RM can be used to implement a logging of a master application and also to implement a replay of a restart application.

During execution of the application's executable files, a process P executes a line of code calling up the routine R, for example the routine "sem_wait" from the "POSIX.4" standard, which requests the positioning of a given semaphore for gaining an mutual exclusion access to a given area in shared memory. In the case of a multi-thread application, this may involve an instruction - "pthread_mutex lock" from the "POSIX threads" standard - which fulfils a similar rôle.

An interposition agent META, loaded into the system when it is booted or before the application's executable files, intercepts the call to the system's original routine R, and forwards it to the amended routine RM. This amended routine comprises instructions implementing or calling up the original routine R - "sem_wait" - preceded by instructions implementing a prologue and followed by instructions implementing an epilogue.

These supplementary instructions can comprise, in particular, an algorithm from the following types:

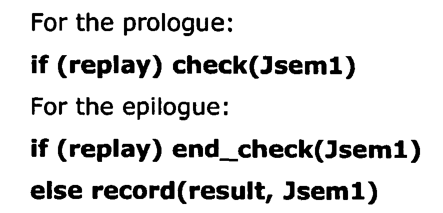

The instructions "if(replay)" test a condition indicating whether the application is in the process of implementing a replay or not.

In the opposite case ("else"), this means that the application is being executed normally and must therefore be treated as a master application. The epilogue then executes a function - "record(result, Jseml)" - which is a recording probe as cited previously and participates in the logging of an internal event, at the same time storing the result - "result" - in the log -"Jsem1".

When the "sem_wait" routine is called up by the restart application during a replay using the "Jsem1" log, the prologue is executed before implementing the system's original "sem_wait" routine.

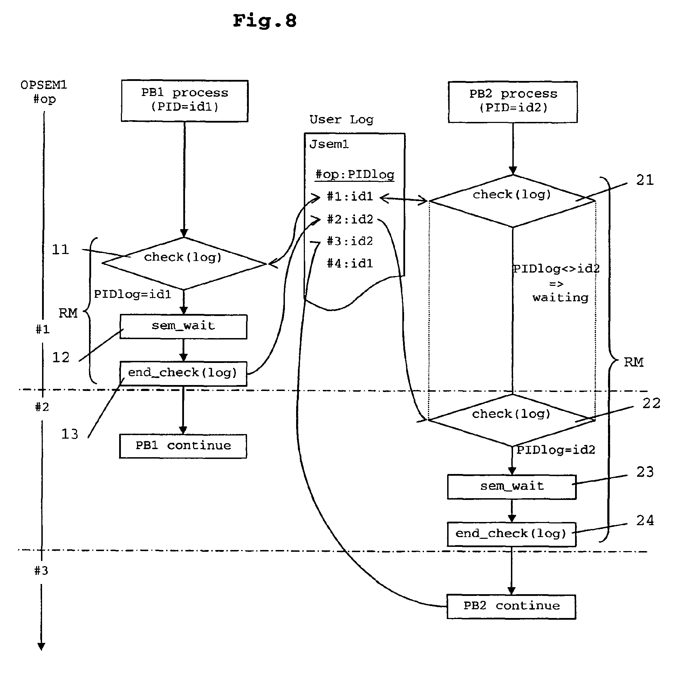

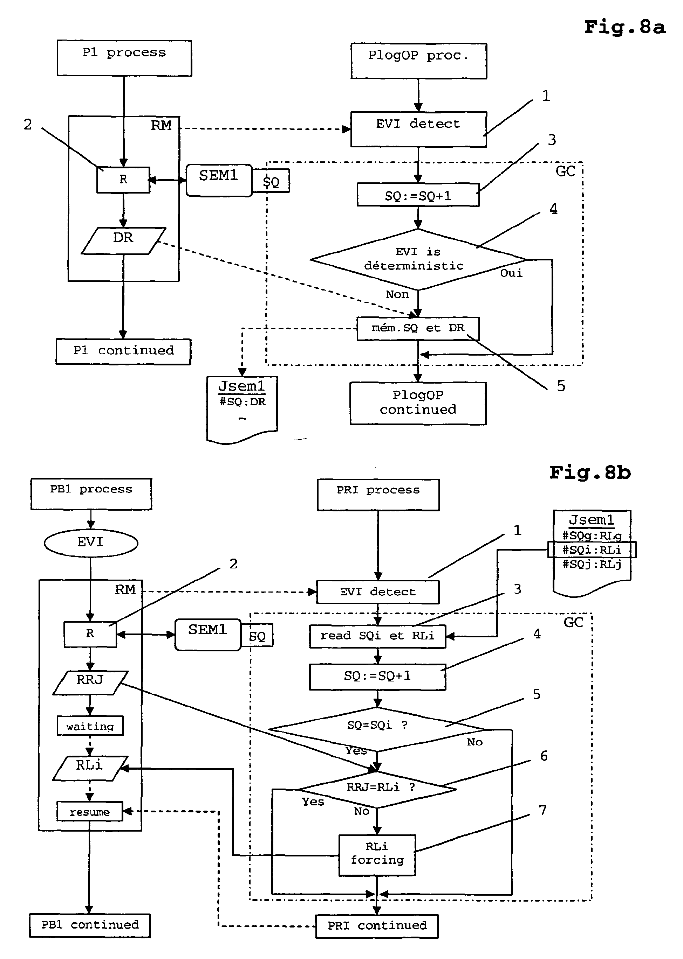

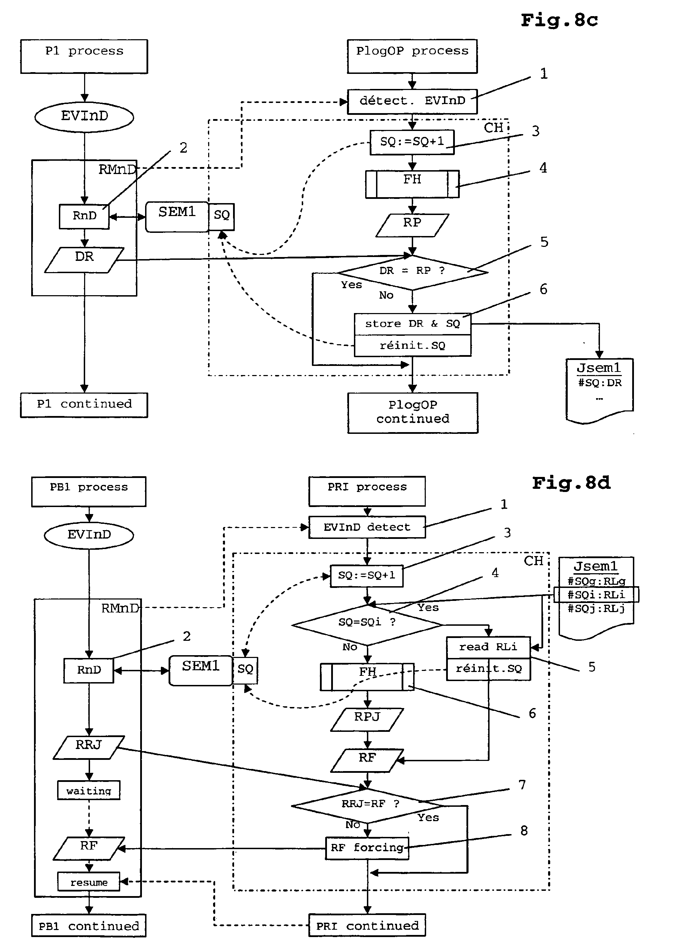

Figure 8 represents a time flowchart which illustrates the operation of this amended routine RM to implement the replay of the two processes PB1, PB2 from the JSEM1 log included in the internal event log - "User Log". Each event logged in the JSEM1 log is numbered according to an incremental sequence #OP specific to the semaphore SEM1 in question. Associated to each of these numbers #op, the JSEM1 log contains an identification (PID) of the process which has called up the semaphore corresponding to said JSEM1 log during the logging.

As the two processes PB1 and PB2 are executed in parallel, their respective calls to the SEM1 semaphore using the "sem_wait" function are not necessarily made in the order stored in the semaphore's log JSEM1.

When the "id2" identifier process PB2 calls up the SEM1 semaphore during the replay, the prologue then executes the instruction "check(Jsem1)" in the name of said same process PB2, in a step 21. This function - "check(Jsem1)" - reads in the JSEM1 log the line corresponding to the current value of the sequence number OPSEM1, that is line "#1: id1".

This "check" function compares the value PIDlog read, or "id1", with the identifier of the calling PB2 process, or "id2". If it notes that these values differ, this "check" function suspends execution of the calling PB2 process, for example by re-executing this same step 21 of comparing in a continuous loop.

Subsequently, when the PB1 process identifier "id1" also calls up the SEM1 semaphore during the replay, the prologue also executes the "check(Jsem1)" instruction, but this time in the name of the new PB1 calling process, in a step 11. If it notes that said PB1 calling process is indeed the one which identifier "id1" is stored in the log at the line corresponding to the current number in the active sequence, i.e. the value "#1", the "check" function authorises the continued execution of the PB1 calling process.

In a step 12, the amended routine RM then implements the functions of the original routine R, i.e. the "sem_wait" instruction, which then assigns to it the SEM1 semaphore and returns the value "id1" of the PB1 calling process.

In a step 13, the epilogue then executes the "end_check(Jsem1)" instruction in the name of the PB1 calling process. Said "end_check" function then closes the PB1 process' "sem_wait" call and unblocks the execution of the PB2 process which has been on hold. This operation can comprise specifically an incrementing of the sequence number OPSEM1 of this SEM1 semaphore, making it move to the next value "#2".

In this case, when the "check" function called up by the PB2 process is executed again in a step 22, it reads the next line of the JSEM1 log "#2: id2" and lets its PB2 calling process continue its execution of the amended routine RM.

In a step 23, the amended routine RM then implements the functions of the original routine R, or the "sem_wait" instruction, which then assigns to it the SEM1 semaphore and returns the value "id2" of the PB2 calling process.

In a step 24, the epilogue then executes the "end_check(Jsem1)" instruction in the name of the PB2 calling process, again incrementing the SEM1 semaphore sequence and making it available to continue the replay.

Regardless of the order in which the various replayed processes request assignment of the SEM1 semaphore, it is clear that they can only be obtained in the exact order stored in its JSEM1 log, and therefore in the same order as during the running of the master application which generated this logging.

As these additional instructions are added by a META agent outside the master application and added to the operating system without any change to the latter, it is clear that these logging and replay operations are implemented transparently and non-intrusively, for the master application and without changing pre-existing elements of the system.

Given the large number of internal events, it is useful to optimize the function of their logging and/or replay, in particular to avoid any degradation of performance which would largely detract from the benefits obtained from the aforementioned characteristics.

Among the types of internal event which occur between two external events, most can be classified as deterministic, i.e. incorporating only operations whose results depend exactly on the state of the application before these operations.

On the other hand, in particular during multi-task operations or those distributed over several nodes, some internal events are of a non-deterministic type, as they comprise operations which can provide a result dependent on factors outside the application or the primary node.

By logging or replaying only internal events of non-deterministic types, it is therefore possible to limit overload of the operational node, and thus degraded performance caused by the use of the intermediate application to make reliable or manage the master application.

As illustrated in 8a and 8b, the logging and replay can be accelerated, in particular by only logging the result and only presetting results at replay for internal events where the behaviour is not deterministic.

For all events, and in particular internal events (EVI), a META interposition mechanism (figure 7), as described previously, calls up an amended routine RM implementing the operation stipulated instead of the original routine R. This amended routine RM comprises a functionality capable of initiating or notifying a logging process PlogOP or a replay process PRI from the occurrence of this event EVI, and if necessary wait for its agreement to continue the processing of this event or to hand it over to the P1 or PB1 process which has called it up.

Whether this involves logging or replay, managing this event EVI then comprises a reactive step to the occurrence of this event, followed by an additional management step GC (figures 8a, 8b) whose content depends on the deterministic or non-deterministic nature of this internal event.

Figure 8a illustrates the operation of logging an internal event. While the P1 process is executed through a logged (JOP figure 1) run, executing an instruction implements an internal event EVI applying to a shared resource, such as a SEM1 semaphore.

In a step 1, the amended routine RM corresponding to the event to be logged EVI notifies or initiates the logging process PlogOP, which thus detects the occurrence of this event EVI.

In a step 2, the amended routine RM corresponding to the event EVI implements on the SEM1 semaphore the operation stipulated in the original routine R and receives or calculates a result datum DR addressed to the logged process P1.

In a step 3, the logging process PlogOP increments a sequence number SQ, for example assigned to the SEM1 semaphore, corresponding to the position of the detected event EVI in a P1 logging sequence.

In a step 4, said process PlogOP carries out a test to establish whether the internal event EVI detected is deterministic or not. This test can apply, for example, to a parameter received from the amended routine RM during its call, or to the presence of a result datum DR sent with this call, or to an instruction or event identification previously stored in the primary OP node.

In a step 5, if the detected event EVI is non-deterministic, the PlogOP process sends the result datum DR to the secondary node's PlogSB logging process. This stores the result datum DR and the sequence number SQ corresponding to the event EVI, such that they are associated in a log file JSem1 corresponding to the semaphore SEM1, following the result of preceding logged events. Depending on the logging conditions, data stored in the JSem1 log can also be stored directly in a log file on a permanent medium in the primary node by the PlogOP logging process.

On completion of a sequence of internal events for the logged process P1, the JSem1 log contains an ordered set of all the result data sent by the SEM1 semaphore to said P1 process, associated to the sequence numbers for the events which involve them.

Figure 8b illustrates the replay operation for this internal event EVI , in a restart process PB1, during a passive replay phase RSB (figure 1), controlled by a replay process PRI (see figure 6), of the events stored in the JSem1 log and corresponding to the SEM1 semaphore. While the PB1 process is running and during the replay of events from the JSem1 log, executing an instruction implements an internal event EVI of a non-deterministic type applying to the SEM1 semaphore.

In a step 1, the amended routine RM corresponding to the event to be logged EVI notifies or initiates the replay process PRI, which thus detects and identifies the occurrence of this event.

In a step 2, the amended routine RM corresponding to the event EVI implements on the SEM1 semaphore the operation stipulated in the original routine R and receives or calculates a result datum corresponding to the actual replay result RRJ. The amended routine RM then suspends execution of the restart process PB1 and waits for a signal from replay process PRI to send this result RRJ to the restart process PB1.

In a step 3, the replay process PRI reads in the JSem1 log the next unused value RLi for the replay, with the sequence number SQi which is associated to it.

In a step 4, the process for incrementing a sequence number SQ, for example assigned to the SEM1 semaphore, corresponding to the position of the detected event EVI in a PB1 replay sequence PB1.

In a step 5, the replay process PRI carries out a test on the current sequence number SQ and the read sequence number SQi in the log, to establish whether the ongoing replay event EVI corresponds to a logged event.

In a presetting step 7, if these events correspond, the replay process PRI sends the read result RLi in the log to the amended routine RM, which stores it instead of the result RRJ from the original operation R. The amended routine RM then returns this result RLi to the restart process PB1 and lets it continue its execution.

Optionally, the presetting step 7 is preceded by a step 6, in which the replay process PRI receives from the amended routine RM the actual replay result RRJ and compares it with the read result RLi corresponding to the result of the same event during logging. If said two results RRJ and RLi correspond, the process releases directly the amended routine, which returns its result to the restart process PB1 and lets it continue its execution.

Hence it is clear that non-deterministic events can be recorded and replayed faithfully and exactly, ensuring for the restart process PB1 a replay run which will be faithful to that of the target process P1 during logging.

As only certain events are logged or replayed, and because supplementary internal operations to implement the invention are much faster then a storage or transmission for logging, overhead due to the operation of the intermediate application INT is reduced.

Optionally, when an original routine R is envisaged only to record events which are deterministic, an amended routine RM which corresponds to it may omit to provide any call to a logging or replay process. Likewise, when an original routine R is envisaged only to implement non-deterministic events, its amended routine RM can comprise a systematic call to a logging or replay process. During logging, step 4 (figure 8a) to test the deterministic nature can therefore be implicitly produced through the type of call received or even through the fact that a call is received.

In the case where a given type of internal event can be deterministic or not, depending on the type of application or the conditions of its execution, the amended routine RM can also include in its prologue and/or its epilogue instructions evaluating this type of application or these conditions of execution.

The use of a sequence number SQ can also be optional. In this case, the logging process PlogOP (figure 8a) is confined to memorizing the result datum when the event EVI is of the non-deterministic type. For its part, the replay process PRI (figure 8b) is confined to reading the next logged result RLi, and considers that this is the result to be forced for the next event EVI detected as being non-deterministic.

Moreover, a heuristic, or predictive, method of optimization allows for not logging systematically all internal non-deterministic events. This method can be implemented alone or in combination with other methods of optimization.

Owing to the cost in terms of time for logging and replay operations, in particular as regards to operations internal to a node, it can indeed be useful to implement a certain number of additional internal operations if this allows the number of logging operations to be decreased.

This heuristic optimization technique comprises the implementation, by the intermediate application, of a heuristic compression operating by predicting results and applying over all or part of the internal events detected during the operation of the master application.

During logging in the operational node, this heuristic compression can for example be implemented by the internal logging process PlogOP.

Figure 8c illustrates the function of the logging of a non-deterministic event, with use of this heuristic compression CH.

While the P1 process is executed through a JOP logged run, executing an instruction implements an internal event EVInD of a non-deterministic type applying to a shared resource, such as a SEM1 semaphore.

In a step 1, the amended routine RMnD corresponding to the event to be logged EVInD notifies or initiates the logging process PlogOP, which thus detects the occurrence of said event EVInD.

In a step 2, the amended routine RMnD corresponding to the event EVInD implements on the SEM1 semaphore the operation envisaged in the original routine RnD and receives or calculates a result datum DR addressed to the logged process P1.

In a step 3, the process PlogOP increments the logging sequence number SQ corresponding to the SEM1 resource involved with detecting the event EVInD.

Advantageously, said sequence number SQ is stored in working memory in the primary node OP. Therefore, its management represents a very low overhead compared with sending a result datum to a secondary node or compared with its storage in a log file on a permanent medium.

This incrementing of the sequence number SQ associated to the SEM1 semaphore and its log JSEM1 thus allows the recording of the passing of a non-deterministic event EVInD correctly predicted by the prediction function FH, while avoiding the overhead which systematic storage of the result datum DR would represent

In a step 4, the process PlogOP implements a software operation FH comprising a prediction of the result of this internal event EVInD in the form a predicted result RP. Preferably, this prediction is a deterministic software process made up of one or more deterministic functions based on the state of the logged process P1 or the master application before this event EVInD.

In a step 5, the process PlogOP compares the predicted result RP with the actual result DR output from the running RnD of the detected event EVInD.

In a step 6, if these two results DR and RP are different, the PlogOP process forwards the actual result DR and the corresponding value of the sequence number SQ, to the secondary node process PlogSB, which memorizes them by associating them as the next line in the log file Jsem1 corresponding to the resource SEM1 in question.

During this step, it is possible to envisage a reinitialization of the sequence number SQ for logging the SEM1 resource in question. In this case, the sequence number SQ represents the number of events correctly predicted since the last event whose result has been logged.

On completion of a sequence of internal events for the logged process P1, the JSem1 log contains an ordered set of all the result data sent by the SEM1 semaphore to said P1 process and which have not been predicted correctly by the prediction function FH.

In the case where the logging of internal events has been implemented by using such an heuristic optimization, the intermediate application then implements a heuristic decompression when replaying in a secondary node. This heuristic decompression uses a prediction identical to that used for compression and applies to the same events as during logging with heuristic compression.

Figure 8d therefore illustrates the replay operation for a non-deterministic event, with use of this heuristic decompression DH, in a passive replay of a restart process PB1, controlled by an internal replay process PRI (c.f. figure 6), based on the log JSem1 applying to the SEM1 semaphore.

During the replay of events from the JSem1 log, executing an instruction implements an internal event EVInD of a non-deterministic type applying to the SEM1 semaphore.

In a step 1, the amended routine RMnD corresponding to the event EVInD to be replayed notifies or initiates the replay process PRI, which thus detects and identifies the occurrence of this event EVInD.

In a step 2, the amended routine RMnD corresponding to the event EVInD implements on the SEM1 semaphore the operation envisaged in the original routine RnD and receives or calculates a result datum corresponding to the actual replay result RRJ. The amended routine RMnD then suspends execution of the replay process PB1. It then waits for a signal from the replay process PRI to forward said result RRJ to the restart process P1 and to let it continue its execution.

In a step 3, the process PRI reads and increments the value of a sequence number SQ corresponding to the semaphore SEM1.

In a step 4, the internal replay process PRI compares this sequence number SQ with the next sequence number SQi not yet replayed from those stored in the log file Jsem1 corresponding to this same resource SEM1.

In a step 5, if these sequence numbers SQ and SQi correspond, then the internal replay process PRI reads the stored result RLi in this log for this sequence number SQi, and stores it as a forced result RF to be returned by the detected event EVInD. The internal replay process PRI then stores the fact that the event represented by the line SQi in the log JSem1 has been replayed, and activates the next line SQj of this same log for the processing of the next event detected.

During this step, it is possible to envisage a reinitialization of the sequence number SQ for replaying the SEM1 resource in question.

In a step 6, if these sequence numbers SQ and SQi do not correspond, the internal replay process PRI implements a software operation FH including the same result prediction as that produced during the logging of this internal event, in the form of a predicted result RPJ. The internal replay process PRI then stores the result RPJ of this prediction as a forced result RF to be returned by the detected event EVInD.

In a step 8, the internal replay process PRI forwards the forced result RF to the amended routine RMnD, which imposes it on the restart process PB1 instead of the actual replayed result RRJ returned by the internal event EVInD. The amended routine then lets the restart process PB1 continue its execution.

Optionally, this presetting can be preceded by a test step 7 to compare these two results RRJ and RF, and avoid acting in the restart process PB1 if these results correspond.

It should be noted that the identification of sequencing data SQ used in this method of predictive optimization can be made up of variables different from those described previously (figures 8a and 8b), or be organized and processed jointly with these.

It is therefore clear that, even without logging the results of all non-deterministic events, the latter can be recorded and replayed faithfully and exactly. In this way, it is therefore possible to optimize these logging and replay operations, while ensuring a running of the replay run of the restart process PB1 d which is faithful to that of the target process P1 during logging.

Given the difference in speed between logging operations and simple calculating operations internal to a node, this heuristic optimization technique can be useful even if the prediction function used does not have a very high success rate. If this difference is large, even a prediction success rate of less than 50% can allow useful optimization.

This heuristic optimization technique can also use several different prediction functions; providing the same is used for logging and then replaying a single event or groups of internal events. The choice of prediction function to be used can be made according to the state of the application or its environment, for example starting from a knowledge database or rules. This change can then be stored in the logging data stored by the intermediate application. This heuristic optimization technique can also be used auto-adaptively, by evaluating its success rate during logging and by initiating a change of said function based on the value of this success rate or on its variation.

An example of the prediction function used in this heuristic optimization technique comprises a prediction of the order of occurrence of internal events based on the order of internal events coming from different clients.

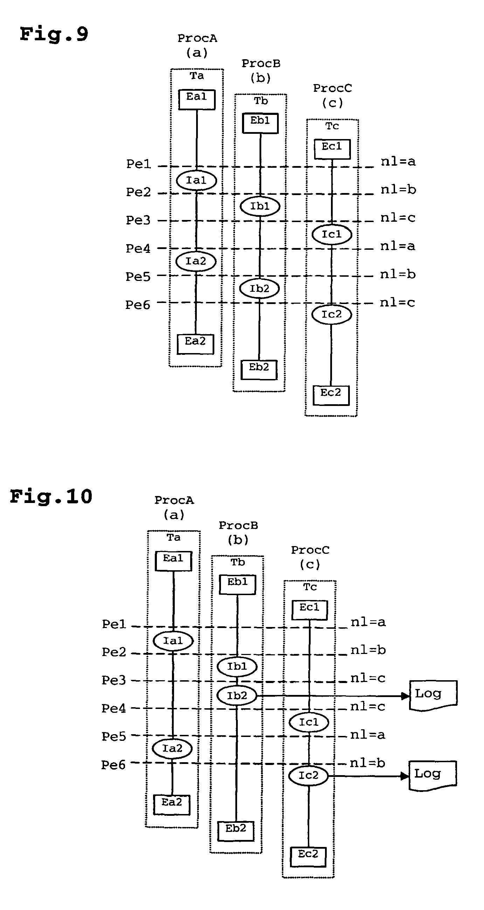

Figures 9 and 10 illustrate the occurrence of external and internal events participating in three processes ProcA, ProcB, ProcC, with identifiers rated respectively as "a", "b" and "c", for example executing three tasks Ta, Tb, Tc launched by three different clients respectively. These various tasks each comprise, for example, a first external event Ea1, Eb1, Ec1, and a second external event Ea2, Eb2, Ec2. Between these first and second external events, each of these tasks includes the initiation of two internal non-deterministic events. In figures 9 and 10, the successive internal events for the task Ta are referenced Ia1 and Ia2, those of the task Tb are referenced Ib1 and Ib2, and those of the task Tc are referenced Ic1 and Ic2. These internal events Ia1 to Ic2 can be different from each other, or even involve a single determined resource, for example lock allocations to a single set of shared memory area.

During tasks that are approximately concurrent, and in particular when they have similar or common parts and/or have similar execution times, a prediction function consists of predicting that the order of occurrence of the intermediate internal events Ia1, Ib1, Ic1 will be the same as the order of occurrence of the external events preceding them.

While the master application is running, the order of occurrence of the first external events Ea1, Eb1, Ec1 on the operational node OP is recorded by the intermediate application, for example in the internal logging process PlogOP. For example, this order of external events comprises the succession of identifiers of the processes associated to these external events, or the sequence of the values "a b c".

On each detection of a new internal event concerning this resource, the prediction function makes a prediction of the result of this internal event, i.e. the identity of the process which will obtain the lock over this resource, i.e. the one which has just requested it. This predicted result will then be calculated by comparing the identity of the last process having obtained the lock over this resource, with this order of external events.

Thus, the prediction function will make a set of predictions Pe1 to Pe6, each shown by a dotted line and whose result is shown at its right hand end.

Figure 9 illustrates the values of predictions made for each occurrence of an internal event, in the case where these internal events follow the order of external events. From the order of external events "a b c" and from the last internal event which occurred, the prediction function will make a prediction forming the sequence of values "a b c a b c", which will be revealed just in these six cases. In the context of an heuristic optimization, the internal logging process PlogOP will therefore have no requirement to forward logging data for these internal events, as they have been correctly foreseen by the prediction function.

Figure 10 illustrates the prediction values made for each occurrence of an internal event, in the case where these internal events do not follow the order of external events exactly, the task Tb of the process PrB for identifying "b" being executed more rapidly than the two other tasks. From the order of external events "a b c" and from the last internal event which occurred, the prediction function will make a prediction forming the sequence of values "a b c c a b". It appears that two predictions Pe3 and Pe6 will be revealed as false, which will lead the internal logging process PlogOP to forward logging data on two occasions. This logging data will therefore include the value "c" in a transmission L1 on completion of the third prediction Pe3 which has been revealed as incorrect, then the value "c" in a transmission L2 on completion of the sixth prediction P6 which has also been revealed as incorrect.

Despite these incorrect predictions Pe3 and Pe6, it is clear that this heuristic optimization will have allowed the internal logging process PlogOP to affect only two transmissions L1 and L2 instead of the six that would have occurred in its absence. This saving of four transmissions out of six represents a work time sufficiently larger than in the internal calculations and operations which are needed to implement this optimization technique, and can therefore provide a significant increase in performance, in particular in the operational node.

Further more, for some internal events where a standard implementation by the operating system will produce a non-deterministic behaviour, it is possible to use a technique of optimization by semantics changing. This technique comprises an amendment to the implementation of such events in the node, in order to give them a behaviour which will be deterministic. The intermediate application makes this amendment identically in the operational node and the secondary node(s), which makes the results of these changed internal events predictable. This amendment to the implementation will be made dynamically by an interposition technique through a "metaprocess" which replaces an original event implementing routine R by an amended routine RM implementing an amended behaviour for this event. The technique used to implement this amendment is similar to that described above (c.f. figure 7) for adding recording probes in the prologue and epilogue, but may include an amendment to the code of the central part for the amended routine. This implementation amendment is produced transparently for the master application and does not alter pre-existing elements of the operating system. By using one of these amended routines in the master application, permanently or at least over a determined and stored execution interval, it is thus possible to log the master application evolution, without having to store the results of said changed events. The use of the same amended routines over the same intervals as those for executing a replay application, thus allows to maintain the reproducibility of the master application, at the same time improving the performance of the logging and the replay.

This amended behaviour is designed so as to comply with the same specifications as the original behaviour and to be fully compatible with it, for example by planning that, from a given situation where the original routine could have sent a number of different results, the amended routine provides only results which could have been provided by the original routine and are therefore envisaged by the master application and the operating system.

This technique of optimization by semantic change enables a reduction of the number of non-deterministic internal events, whose result must be logged in the operational node to be capable of replay during the restoration of a restart application.

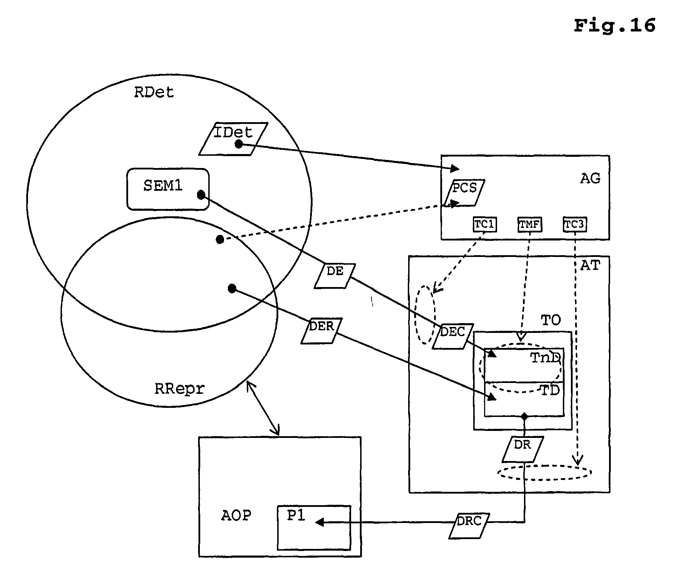

An example of the operation and the interaction of the different parties is illustrated graphically in figure 16.

A processing agent AT, for example in the system software, carries out an operation which will forward a result DR to a process, for example a logged process P1. For many operations or events, in particular internal, said operation is implemented by an operational process TO, which is by its nature deterministic compared with a set of resources RDet, termed determinant.

From the resources accessible to the process P1, some can be termed reproducible resources RRepr from knowledge of the state of this process P1. Said reproducible resources comprise in particular resources whose state depends exclusively on it.

In the operation of the processing agent AT, processing the TO operation can comprise a processing part TD which is deterministic as regards to reproducible resources RRepr of the process PI, for example because it uses only DER data coming from said reproducible resources.

In the case where the operation process TO comprises another part of processing using personal data coming from SEM1 resources not included in the reproducible resources RRepr of the process P1, it is common for the result of this TnD part, and thus all the TO processing, not to be deterministic as regards to the process P1 invoking it.

In such a situation, this semantic change technique may consist of using a management agent AG to amend the processing agent's behaviour or the data which it uses or produces, in order that the operation resulting from this amendment is deterministic compared with the reproducible resources RRepr.

This managing agent can use a functioning modifying treatment TMF to amend the internal operation of the TO operating process.

It can also use the input data DE output from the determinant resources RDet but not reproducible (RRepr) as regards to the process P1, to compensate for variations to the result DR capable of constituting a non-deterministic source for said same process P1. Such a compensation can be carried out by TClmodifying the input data DE into compensated input data DEC, or by TC2 modifying the result data DR into compensated result data DRC.

This managing agent AG can also choose or regulate the modifications TMF, TC1, TC2 which it made, depending on one or more semantic change parameter PCS, in order to optimize the efficiency of the global processing AT and AG. In order to remain reproducible between a logging JOP and a replay RSB, it is sufficient that the variations to this semantic change parameter PCS are determined only by data from the reproducible resources RRepr, or that its variations are stored in the logs UL, KL during logging and are read and applied in the same way during the replay RSB.

This change of behaviour can concern in particular aspects affecting the management of several processes competing for a given resource.

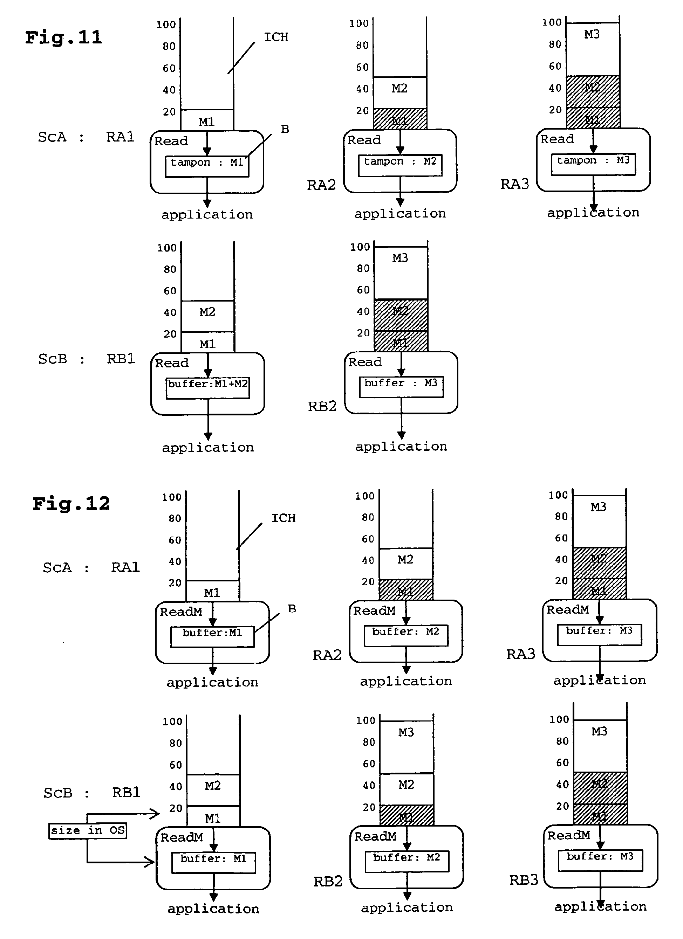

Figures 11 and 12 illustrate an example of using this optimizing technique by semantic change to make deterministic an operation to read received messages by using the "read" routine in a Unix-type environment.

In its standard implementation, the "read" routine, initiated by an application, uses a zone of buffer memory B to read messages in an input channel ICH and forward these to said application. The messages are received in the system in the form of successive data which are stored in a memory zone forming the input channel, as and when they arrive. According to its configuration, the "read" operation can use a buffer of different sizes, but this buffer is used in its entirety for each reading in the input channel.

In this example, the application uses a succession of "read" operations for the buffer B of size "50" to receive three messages M1, M2, M3 which reach it successively through the input channel ICH. These three messages represent data volumes equalling "20", "30" and "50" respectively. However, the speed at which data arrives in the input channel, on the one hand, and the speed of reading operations, on the other hand, can vary from one another in a way which cannot be predicted at the stage of a logging or replay.

Figure 11 thus represents two different possible scenarios for reading the same three messages using an original "read" routine.

In a first scenario SCA, a first reading RA1 is made as only the data from the first message M1, size "20", has arrived. The buffer B is not completely filled, and the operation returns a result corresponding to the content "M1" and a data size of "20". A second reading RA2 is then made after the arrival of the second message M2 alone, which returns a result corresponding to the content "M2" and a data size "30". A third reading RA3 is then made after the arrival of the third message M3, which returns a result corresponding to the content "M3" and a data size "50". For example, for the size of data received by the application, this first scenario A thus returns a set of three results equal to "20, 30, and 50".

In a second scenario SCB, a first reading RB1 is taken as the same first and second messages M1, M2 have already arrived, which returns a result corresponding to the content "M1, M2" and a data size of "50". A second reading RB2 is then made after the arrival of the third message M3, which returns a result corresponding to the content "M3" and a data size of "50". For the size of the data received by the application, this first scenario SCA thus returns a set of two results equalling "50, 50", this for reading the same messages.

These two scenarios therefore return different results "20, 30, 50" for one and "50, 50" for the other. In this, the standard system routine implementing the "read" operation implements a non-deterministic event from the point of view of the application, for logging the master application as well as for replaying a restart application.

For the same situation as in figure 11, figure 12 represents the single scenario ScU which will be obtained by using an amended "readM" routine instead of the original "read" routine.

In this example, the amended routine recognizes the actual length of each of the messages received and reads in the input channel ICH only the data corresponding to a single message, even if the buffer B is not filled and there is still data to read in the input channel ICH. In the case of the logging of the master application, the amended routine recognizes the actual length of the messages M1, M2, M3 using an external event logging mechanism corresponding to the receipt of these same messages, for example the IPlogOP module. In the case of a replay while the restart application is being restored, the amended routine recognizes the actual length of the messages M1, M2, M3 using an external event replay mechanism corresponding to the receipt of these same messages, for example the IPlogSB module.

These two different arrival scenarios SCA, SCB thus give a single behaviour for the reading operation, in the occurrence of a single set of three results equalling "20, 30, 50" for the size of the data received by the application.

Likewise, for other sizes of the buffer B, an original "read" routine producing different sets of results is possible.

Thus, the following results can be obtained for a buffer size of "20", for example: "20, 20, 20, 20, 20" or "20, 20, 10, 20, 20, 10".

The following results can be obtained for a buffer size of "100", for example: "20, 30, 50" or "50, 50" or "20, 80" or "100".

On the other hand, for each buffer size, a "readM" routine thus amended can give only a single set of results.

Thus, for a buffer size "20", the set of results obtained will be "20, 20, 10, 20, 20, 10".

For a buffer size "100", the set of results obtained will be "20, 30, 50".

The "readM" routine thus amended therefore implements a deterministic behaviour for the internal event corresponding to such a reading operation.

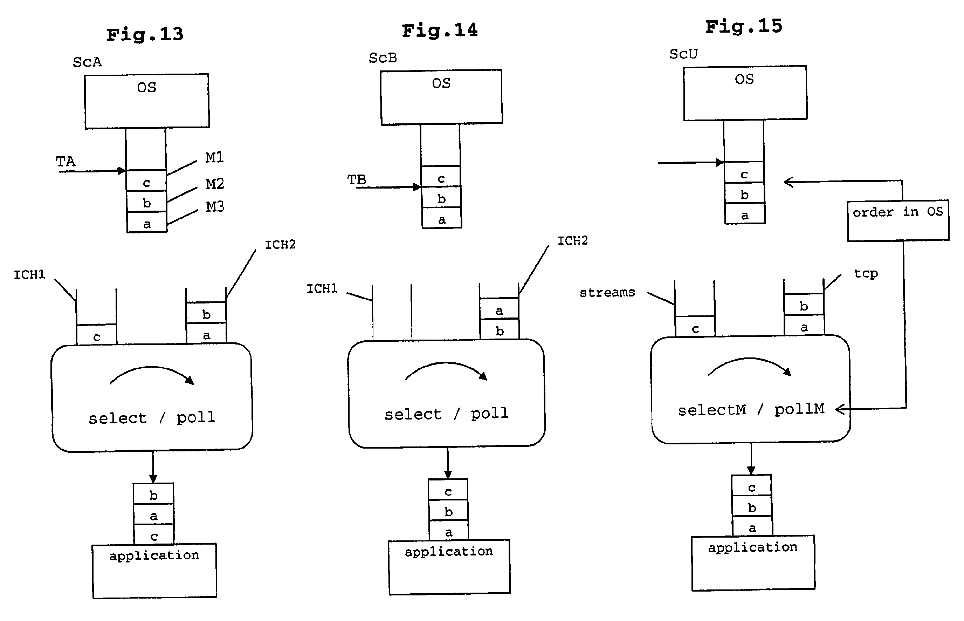

Figures 13 to 15 illustrate another example of the use of this technique of optimization by semantic change, used to make deterministic a multiplexed reading operation initiated by an application process implementing a queuing loop and capable of receiving data from a number of input/output (I/O) channels specifically associated to a number of file descriptors. This example is based on the use of the "select" routine in an environment of the Unix type, but could also be applied to the use of the "poll" routine.

In this example, three messages M1, M2, M3 with contents equalling "a", "b" and "c" respectively are received by the node operating system OS, addressed to two different channels ICH1, ICH2.

This example can be applied in particular to the receipt of data in the form of a "stream" by the first channel ICH1, and data in the form of messages or packets of the TCP type by the second channel ICH2. In the operating system OS, two TCP packets, followed by a "stream" packet are then received as three successive messages M1, M2, M3 with content equalling "a", "b" and "c" respectively.

As it receives these and according to its workload, the operating system OS processes and distributes this data in the channels ICH1, ICH2 corresponding to their type. At a given instant during its execution, the application calls up the "select" routine to initiate a reading operation for the different channels by which it can receive messages.

In its standard implementation, the "select" routine reads the queuing data in the first channel ICH1, followed by that in the second channel ICH2, and forwards this immediately to the application, in the order in which it read them.

Now, the speed at which data arrives in the operating system OS, the speed of its processing by the operating system and therefore its speed of arrival in the input channels, on the one hand, and the speed of execution by the application of a succession of read operations, on the other, can vary from one another in a way which cannot be predicted at the stage of a logging or replay.

In a first scenario SCA, illustrated in figure 13, the application initiates a multiplexed reading by the "select" routine at a first instant IA, as the three messages have already arrived in the two input channels ICH1, ICH2. When the "select" routine reads the data, it therefore reads first the third message contained in the first channel ICH1, followed by the two first messages M1, M2 in the second channel ICH2. The "select" routine then forwards this data in the order of reading and the reading operation thus produces a result comprising the data set "c, a, b".

In a second scenario SCB, illustrated in figure 14, the application initiates a multiplexed reading by the "select" routine at a first instant IB, as only the first two messages have arrived in the second input channel ICH2. When the "select" routine reads the data, it therefore reads only the two first messages M1, M2 in the second channel ICH2 and forwards this data to the application in the order of reading, or the set "a b". During the next reading, after the third message M3 has arrived in the first channel ICH1, the "select" routine reads this third message and forwards it to the application. In said second scenario B, the reading operation by the original "select" routine therefore produces a result comprising the data set "a b c".

These two different scenarios SCA, SCB therefore return different results, "c a b" for one and "a b c" for the other. In this, the standard system routine implementing the "select" operation implements a non-deterministic event from the point of view of the application, for logging the master application as well as for replaying a replay application.

For the same situation as in figures 13 and 14, figure 15 represents the single result which will be obtained by using an amended "selectM" routine instead of the original "select" routine.

In this example, the amended routine recognizes the order in which the messages arrive in the operating system OS, and reads the messages in the order in which they arrived. Moreover, to reduce the risks of ambiguity, the amended routine sends only a single file descriptor each time. The amended routine can obtain information on the order in which the messages arrive, for example by examining the content of messages in the input channels ICH1, ICH2, or from logging or replay data.

These two different arrival scenarios SCA, SCB thus give a single behaviour for the multiplexed reading operation, in the event a single set of three results equalling "a b c".

By thus amending the method of operation of certain routines implementing the behaviour of internal events which were not deterministic in a standard environment to make them deterministic, it is clear that a reduction of the number of non-deterministic events is obtained. When this amendment is applied identically during logging in the master application and during replay in a restart application, the number of events which must be logged to be able to obtain, on completion of the replay, a restart application which is in a state corresponding to that of the master application or which has a satisfactory continuity of operation with said master application, is reduced.

Therefore, it is clear that this technique of optimization by semantic change can improve the performance of the logging and replay operations, and thus the intermediate application.

In fact, according to the routines to which this technique of semantic change is applied, and according to the nature of the amendment made to them, this can result in a minor fall-off in performance in said routine compared with its original behaviour. However, given the slow speed of logging operations, the savings generated in terms of the number of operations to be logged can allow significant improvement in the overall performance of the master application within the framework of the intermediate application.

In this description, it can be seen that the mechanisms of the intermediate application are in the main implemented by processes or modules being executed in the user space of the operational node or of secondary nodes. In particular, this means the logging or replay processes, external or internal, identified here in the intermediate application INT (figure 1) under the references "Plog" (figure 2), "IPlogOP" and "IPlogSB" (figure 3), "PlogOP" and "PlogSB" (figure 4), "PRE" (figure 5) and "PRI" (figure 6), "META" (figure 7).

In contrast, the mechanisms being executed in the system space comprise above all the interposition modules, or those for adding or amending functions, which are managed from the application modules. This in particular means modules identified here under the references "DISP" (figure 3), and "ipfilter" (figure 5). Certain of these kernel modules can also be loaded or unloaded from the application modules as required.

The fact that the execution and the "life" of the intermediate application takes place in the user space enables to limit the interactions with the operating systems of the different nodes. This feature in particular provides a flexibility in deployment and management, a certain independence towards operating systems and their optional heterogeneity, limits the risks of type or release incompatibility, and can limit interventions in the system space of the nodes which are not involved, or only to a lesser degree, in the deployment of said intermediate application. This independence towards operating systems can also limit development times and costs, by avoiding too much in-depth intervention in pre-existing elements of the system space, and retaining a certain commercial and technical independence towards specifications and changes to these operating systems and towards the policies of the organizations which manage them.

An intermediate application as described above can be implemented in different ways and according to different combinations to provide users or managers of a cluster with a support or management service for other applications. Such a service can in particular be obtained in the form of a network software product of the "middle-ware" type, allowing the management, optimizing or reliability improvement, in a cluster, of one or more applications in their original version ("legacy"), at the same time providing functions of flexibility or additional security or fault tolerance, for example adapted to the nature of the cluster.

The use of such an intermediate application can more particularly take the form of securing services provided by these applications to their clients. Each application will therefore be able to be treated as a master application and be restored in the form of a restart application to replace the master application for its clients as necessary.

The services provided by the applications being executed in all or part of a given node can also be shifted to one or more other nodes dynamically and on demand, by freeing their original node completely. Therefore, it will be possible to implement all the hardware or software interventions wanted on this node, whether these be maintenance, trials, upgrades or replacement.

Such an intermediate application can be used in particular to implement an environment of the "middleware" type, comprising functionalities for distributing the workload (load balancing) between the different nodes, to optimize the use of the different hardware, in particular according to its power, availability, or its geographic situation in the network, for example its remoteness from its clients or the data which is used.

Obviously, the invention is not limited to the examples which have just been described and numerous amendments may be made thereto, without departing from the scope of the invention as defined in the appended claims.

## Claims

1. Method for the execution of at least one application process termed target (PB1) on a computer (SB), **characterized in that** it carries out a replay (RSB) also formed restart by said target process of at least one internal operation termed logged, represented by logging data (JSem1; fig. 8b), this method comprising the following steps:
- execution by this target process of at least one program instruction, termed replay instruction, initiating an operation termed replayed operation (EVI), corresponding to said logged operation, and which returns to said target process (PB1) at least one replay result datum (RRJ) representing a result obtained by said replayed operation;
- implementation, by a software agent (PRI) external to the restart process, of a processing termed forcing (7) comprising taking into account by the target process, instead of the replay result datum (RRJ), a forced datum issued from the logging data and representing for the replayed operation a given result termed logged result (RLi).

2. Method according to claim 1, **characterized in that** the target process (PB1) executes the replay instruction of its own initiative by moving at least one program execution pointer within at least one executable file (EXE; fig. 7).

3. Method according to one of claims 1 or 2, **characterized in that** it moreover comprises an interception step (META; fig. 7) of the replay instruction or of the replayed operation (EVI) that it initiates.

4. Method according to claim 3, **characterized in that** it uses an ordered set, termed log (UL, JSem1; fig. 6), of logging data representing a succession of logged operations, to execute at least one target process (PB1) by performing a replay (RSB) of this succession of logged operations.

5. Method according to claim 4, **characterized in that** the interception step (META) moreover comprises a phase of testing (5; fig. 8b) the logging data (JSem1) to verify if it contains logging data representing a logged result (RLi) wherein said logged result corresponds to the replayed operation (EVI), the forcing step (7) only being performed if said log contains such a logged result (RLi).

6. Method according to one of claims 4 or 5, **characterized in that** the replayed operations comprise on the one hand, deterministic operations and on the other hand non deterministic operations, the forcing phase (7; fig 8b) not being applied to at least one of said deterministic operations.

7. Method according to one of claims 4 to 6, **characterized in that** it uses a log (JSem1, UL) representing all operations of at least one given type performed during the execution of a process termed logged (P1), this log being designed so as to enable a target process (PB1) to be executed, performing a replay (RSB) of said logged process.

8. Method according to one of claims 4 to 7, **characterized in that** it uses a log (JSem1, UL) representing all operations of at least one given type, relating to a given resource (SEM1) and performed during the execution of a process termed logged (P1), this log being designed so as to enable a target process (PB1) to be executed, performing a replay (RSB) of said logged process relating to said resource.

9. Method according to one of claims 5 to 8, **characterized in that** it performs a replay (RSB), by at least one target process (PB1), of all the non deterministic internal events which have occurred during at least one part of the execution of said logged process (P1).

10. Method according to one of claims 5 to 9, **characterized in that** the test step (5; fig. 8b) of the log (JSem1) relates to the position (SQ) of the replayed operation within the execution of the target process (PB1), compared with respect to the position (SQi), within the logged execution, of the first operation not yet replayed for which the log (JSem1) contains data representing a logged result (RLi).

11. Method according to one of claims 4 to 10, **characterized in that** it uses a log (JSem1) representing all operations of at least one given type applied to a shared resource termed logged resource (SEM1), to perform a replay of said logged operations by at least one target process (PB1, PB2) termed restart process, this restart process accessing a resource termed target resource (SEM1) corresponding to the logged resource.

12. Method according to claim 11, applied to at least one replayed operation by a target process (PB2; fig. 8) and comprising a pre-emptive request for attribution of at least one target resource (SEM1) of shared resource type, **characterized in that** the forcing step comprises the following steps:
- test step (21) verifying if the logged result (id1) of the next logged operation (#1) not yet replayed for this resource corresponds or does not correspond to an attribution to said target process (PB2);
- whenever this test (21) is negative, holding the target process (PB2) and repeating said test until a positive result is obtained (22).

13. Method according to one of claims 3 to 12, **characterized in that** the replay instruction comprises a call to a routine, termed original (R; fig. 7), external to the executable file (EXE), the interception step (META) comprising a call to a routine termed modified (RM), instead of said original routine, this modified routine performing or initiating the forcing processing (7; fig. 8b).

14. Method according to claim 13, **characterized in that** the modified routine (RM) comprises at least one instruction executed within the software system (SBS) and comprises a call to at least one software agent, termed replay (PRI), executed in the user memory space (SBU) of the computer of the target process (PB1, PB2) and managing implementation of the replay by the target process.

15. Method according to one of claims 13 or 14, **characterized in that** the modified routine (RM) comprises a test instruction for verifying if the instruction which called it is executed in the context of a replay (RSB) or not, this test affecting the call to the replay agent (PRI).

16. Method according to one of claims 1 to 15, **characterized in that** it performs an management of the functioning of at least one application process termed the logged process (P1) and comprises the following steps:
- recording (JOP), and storing in the form of logging data (UL, KL), data representing the events of at least one given type which have occurred during the execution of said logged process (P1) since a given point termed restart point and up to a point termed interruption;
- from a restart process (PB1) in a state corresponding to the restart point state of the logged process (P1), replaying (RSB) said events by said restart process from said logging data (UL, KL), thus bringing the restart process into a state corresponding to the state of the logged process at the interruption point.

17. Method according to claim 16, **characterized in that** the logging data represent all events of one or more given types, which occur in the logged process (P1) since a given point of its execution, termed restart point, the replay step being applied to the restart process (PB1) from a state corresponding to the replay point state of the logged process, the replayed sequence restoring the restart process into a state corresponding to that of the logged process after the logged sequence.

18. Method according to one of claims 16 or 17, **characterized in that** the restart process (PB1) performs the replay (RSB) of at least one logged sequence of internal events in reaction to the occurrence of a external event initiated by a external replay agent of (PRE; fig. 5).

19. Method according to one of claims 16 to 18, **characterized in that** the state of the logged process (P1) at the restart point is captured (CAP) and stored in the form of restart point data (EPR), which is used to restore (RES) the restart process into the restart point state before applying the replay phase (RSB) to it.

20. Method according to one of claims 16 to 19, **characterized in that** it performs a monitoring of the execution of an application, termed traced application (AOP), this monitoring applying to at least one process (P1) of the traced application and comprising the following steps:
- from a given state of the traced application, logging (JOP) of a plurality of successive and contiguous logged sequences constituting a studied sequence within the execution of the traced application;
- production of a controlled succession of replay steps (RSB) producing a controlled execution of the rest of the logged sequences, thus producing a replay of the studied sequence according to a controlled rhythm.

21. Method according to one of claims 17 to 20, **characterized in that** it carries out a reliabilization of the functioning of a first application, termed reliabilized application (AOP), executed in at least one primary node, termed operational node (OP), of a communicating multi-computer architecture, termed cluster, this reliabilization comprising a restoration (RES), into a state corresponding to the state of the reliabilized application at the restart point, of a second application termed the standby application (ASB), within a second cluster node, termed the standby node, the reliabilization comprising in addition the following steps:
- logging (JOP) the execution of the reliabilized application (AOP) from the restart point, and storage, outside the operational node (OP), of logged events in at least one log file (UL, KL);
- detecting a failure within the operatonal node (OP);
- using said log file for replaying (RSB) in the standby application (ASB) the events logged in the reliabilized application (AOP) since the restart point, thus restoring the standby application into a state corresponding to the state of the reliabilized application after the last logged event.

22. System comprising a network of computers working together and including at least one node (OP, SB) implementing a method according to one of claims 1 to 21.

23. System according to the previous claim, **characterized in that** it uses an application (INT) of the middleware type to manage the functioning of at least one application (AOP) executed within the network.

## Patentansprüche

1. Verfahren zum Ausführen von mindestens einem Anwendungsprozess mit der Bezeichnung Zielprozess (PB1) auf einem Rechner (SB), **dadurch gekennzeichnet, dass** es eine auch als Neustart bezeichnete Wiedergabe (RSB) durch den Zielprozess von mindestens einer internen Operation mit der Bezeichnung aufgezeichnete Operation ausführt, welche durch Aufzeichnungsdaten (JSem1; Fig. 8b) dargestellt wird, wobei dieses Verfahren die folgenden Schritte umfasst:
- Ausführen durch diesen Zielprozess von mindestens einem Programmbefehl mit der Bezeichnung Wiedergabebefehl, der eine Operation mit der Bezeichnung wiedergegebene Operation (EVI) einleitet, die der aufgezeichneten Operation entspricht, und der an den Zielprozess (PB1) mindestens einen Wiedergabeergebnis-Datenwert (replay result datum - PRJ) zurückschickt, der ein von der wiedergegebenen Operation erzieltes Ergebnis darstellt;
- Durchführen einer Verarbeitung mit der Bezeichnung Erzwingungsverarbeitung (7) durch einen außerhalb des Neustart-Prozesses befindlichen Software-Agenten (PRI), welche die Berücksichtigung eines erzwungenen Datenwertes (forced datum) durch den Zielprozess, der von den Aufzeichnungsdaten ausgegeben wird und für die wiedergegebene Operation ein bestimmtes Ergebnis mit der Bezeichnung aufgezeichnetes Ergebnis (RLi) darstellt, anstelle des Wiedergabeergebnis-Datenwertes (PRJ) umfasst.

2. Verfahren nach Anspruch 1, **dadurch gekennzeichnet, dass** der Zielprozess (PB1) den Wiedergabebefehl aus eigenem Antrieb ausführt, indem er mindestens einen Programmausführungszeiger innerhalb von mindestens einer ausführbaren Datei (EXE; Fig. 7) bewegt.

3. Verfahren nach einem der Ansprüche 1 oder 2, **dadurch gekennzeichnet, dass** es darüber hinaus einen Schritt des Abfangens (META; Fig. 7) des Wiedergabebefehls oder der wiedergegebenen Operation (EVI), die es einleitet, umfasst.

4. Verfahren nach Anspruch 3, **dadurch gekennzeichnet, dass** es einen als Aufzeichnung (UL, JSem1; Fig. 6) bezeichneten geordneten Satz an Aufzeichnungsdaten verwendet, die eine Abfolge von aufgezeichneten Operationen darstellen, um mindestens einen Zielprozess (PB1) auszuführen, indem eine Wiedergabe (RSB) dieser Abfolge von aufgezeichneten Operationen durchgeführt wird.

5. Verfahren nach Anspruch 4, **dadurch gekennzeichnet, dass** der Schritt des Abfangens (META) darüber hinaus eine Phase des Prüfens (5; Fig. 8b) der Aufzeichnungsdaten (JSem1) umfasst, um zu überprüfen, ob sie Aufzeichnungsdaten enthalten, die ein aufgezeichnetes Ergebnis (RLi) darstellen, wobei das aufgezeichnete Ergebnis der wiedergegebenen Operation (EVI) entspricht, wobei der Schritt des Erzwingens (7) nur durchgeführt wird, wenn die Aufzeichnung ein solches aufgezeichnetes Ergebnis (RLi) enthält.

6. Verfahren nach einem der Ansprüche 4 oder 5, **dadurch gekennzeichnet, dass** die wiedergegebenen Operationen einerseits deterministische Operationen und andererseits nichtdeterministische Operationen umfassen, wobei die Erzwingungsphase (7; Fig. 8b) auf mindestens eine der deterministischen Operationen nicht angewendet wird.

7. Verfahren nach einem der Ansprüche 4 bis 6, **dadurch gekennzeichnet, dass** es eine Aufzeichnung (JSem1, UL) verwendet, die alle Operationen von mindestens einer bestimmten Art darstellt, die während der Ausführung eines Prozesses mit der Bezeichnung aufgezeichneter Prozess (P1) durchgeführt werden, wobei diese Aufzeichnung so ausgelegt ist, dass sie die Ausführung eines Zielprozesses (PB1) ermöglicht, der eine Wiedergabe (RSB) des aufgezeichneten Prozesses durchführt.

8. Verfahren nach einem der Ansprüche 4 bis 7, **dadurch gekennzeichnet, dass** es eine Aufzeichnung (JSem1, UL) verwendet, die alle Operationen von mindestens einer bestimmten Art darstellt, die sich auf eine bestimmte Ressource (SEM1) beziehen und während der Ausführung eines Prozesses mit der Bezeichnung aufgezeichneter Prozess (P1) durchgeführt werden, wobei diese Aufzeichnung so ausgelegt ist, dass sie die Ausführung eines Zielprozesses (PB1) ermöglicht, der eine Wiedergabe (RSB) des aufgezeichneten Prozesses, welcher sich auf die Ressource bezieht, durchführt.

9. Verfahren nach einem der Ansprüche 5 bis 8, **dadurch gekennzeichnet, dass** es eine Wiedergabe (RSB) durch mindestens einen Zielprozess (PB1) von allen nichtdeterministischen internen Ereignissen durchführt, die während mindestens eines Teils der Ausführung des aufgezeichneten Prozesses (P1) eingetreten sind.

10. Verfahren nach einem der Ansprüche 5 bis 9, **dadurch gekennzeichnet, dass** sich der Schritt des Prüfens (5; Fig. 8b) der Aufzeichnung (JSem1) auf die Position (SQ) der wiedergegebenen Operation innerhalb der Ausführung des Zielprozesses (PB1) im Vergleich zur Position (SQi) der ersten Operation innerhalb der aufgezeichneten Ausführung bezieht, welche noch nicht wiedergegeben worden ist, für die die Aufzeichnung (JSem1) Daten enthält, die ein aufgezeichnetes Ergebnis (RLi) darstellen.

11. Verfahren nach einem der Ansprüche 4 bis 10, **dadurch gekennzeichnet, dass** es eine Aufzeichnung (JSem1) verwendet, die alle Operationen von mindestens einer bestimmten Art darstellt, die auf eine gemeinsam genutzte Ressource mit der Bezeichnung aufgezeichnete Ressource (SEM1) angewendet werden, um eine Wiedergabe der aufgezeichneten Operationen durch mindestens einen Zielprozess (PB1, PB2) mit der Bezeichnung Neustart-Prozess durchzuführen, wobei dieser Neustart-Prozess auf eine Ressource mit der Bezeichnung Zielressource (SEM1) zugreift, welche der aufgezeichneten Ressource entspricht.

12. Verfahren nach Anspruch 11, das auf mindestens eine wiedergegebene Operation durch einen Zielprozess (PB2; Fig. 8) angewendet wird und eine bevorrechtigte Anforderung für die Zuteilung von mindestens einer Zielressource (SEM1) vom Typ einer gemeinsam genutzten Ressource umfasst, **dadurch gekennzeichnet, dass** der Schritt des Erzwingens die folgenden Schritte umfasst:
- Prüfschritt (21), der überprüft, ob das aufgezeichnete Ergebnis (id1) der nächsten aufgezeichneten Operation (Nr. 1), die noch nicht für diese Ressource wiedergegeben worden ist, einer Zuteilung zu dem Zielprozess (PB2) entspricht;
- immer wenn dieser Test (21) negativ ist, Anhalten des Zielprozesses (PB2) und Wiederholen des Tests, bis man ein positives Ergebnis erhält (22).

13. Verfahren nach einem der Ansprüche 3 bis 12, **dadurch gekennzeichnet, dass** der Wiedergabebefehl einen Aufruf einer Routine mit der Bezeichnung ursprüngliche Routine (R; Fig. 7), die sich außerhalb der ausführbaren Datei (EXE) befindet, umfasst, wobei der Schritt des Abfangens (META) einen Aufruf einer Routine mit der Bezeichnung geänderte Routine (RM) anstelle der ursprünglichen Routine umfasst, wobei diese geänderte Routine die Erzwingungsverarbeitung (7; Fig. 8b) durchführt oder einleitet.

14. Verfahren nach Anspruch 13, **dadurch gekennzeichnet, dass** die geänderte Routine (RM) mindestens einen Befehl, der in dem Software-System (SBS) ausgeführt wird, und einen Aufruf von mindestens einem Software-Agenten mit der Bezeichnung Wiedergabe-Agent (PRI) umfasst, der im Benutzerspeicherbereich (SBU) des Rechners des Zielprozesses (PB1, PB2) ausgeführt wird und die Durchführung der Wiedergabe durch den Zielprozess steuert.

15. Verfahren nach einem der Ansprüche 13 oder 14, **dadurch gekennzeichnet, dass** die geänderte Routine (RM) einen Testbefehl zur Überprüfung, ob der Befehl, der sie aufgerufen hat, im Rahmen einer Wiedergabe (RSB) ausgeführt wird, umfasst, wobei sich dieser Test auf den Aufruf des Wiedergabeagenten (PRI) auswirkt.

16. Verfahren nach einem der Ansprüche 1 bis 15, **dadurch gekennzeichnet, dass** es eine Steuerung der Funktionsweise von mindestens einem Anwendungsprozess, der als der aufgezeichnete Prozess (P1) bezeichnet wird, durchführt und die folgenden Schritte umfasst:
- Aufzeichnen (JOP) und Speichern von Daten in Form von Aufzeichnungsdaten (UL, KL), wobei die Daten die Ereignisse von mindestens einer bestimmten Art darstellen, welche während der Ausführung des aufgezeichneten Prozesses (P1) seit einem bestimmten Punkt mit der Bezeichnung Neustartpunkt und bis zu einem Punkt mit der Bezeichnung Unterbrechung eingetreten sind;
- von einem Neustartprozess (PB1) in einem Zustand, der dem Zustand des Neustartpunktes des aufgezeichneten Prozesses (P1) entspricht, Wiedergeben (RSB) der Ereignisse von den Aufzeichnungsdaten (UL, KL) durch den Neustartprozess, wobei der Neustartprozess auf diese Weise in einen Zustand gebracht wird, der dem Zustand des aufgezeichneten Prozesses an dem Unterbrechungspunkt entspricht.

17. Verfahren nach Anspruch 16, **dadurch gekennzeichnet, dass** die Aufzeichnungsdaten alle Ereignisse von einer oder mehreren bestimmten Arten darstellen, die in dem aufgezeichneten Prozess (P1) seit einem bestimmten Punkt seiner Ausführung, der als Neustartpunkt bezeichnet wird, eintreten, wobei der Schritt der Wiedergabe auf den Neustartprozess (PB1) aus einem Zustand angewendet wird, der dem Zustand des Wiedergabepunkts des aufgezeichneten Prozesses entspricht, wobei die wiedergegebene Abfolge den Neustartprozess in einen Zustand zurücksetzt, der dem Zustand des aufgezeichneten Prozesses nach der aufgezeichneten Abfolge entspricht.

18. Verfahren nach einem der Ansprüche 16 oder 17, **dadurch gekennzeichnet, dass** der Neustartprozess (PB1) die Wiedergabe (RSB) von mindestens einer aufgezeichneten Abfolge von internen Ereignissen als Reaktion auf das Eintreten eines externen Ereignisses durchführt, das von einem externen Wiedergabeagenten von (PRE; Fig. 5) eingeleitet wurde.

19. Verfahren nach einem der Ansprüche 16 bis 18, **dadurch gekennzeichnet, dass** der Zustand des aufgezeichneten Prozesses (P1) am Punkt des Neustarts erfasst (CAP) und in Form von Neustartpunkt-Daten (EPR) gespeichert wird, mit denen der Neustartprozess in den Zustand des Neustartpunktes zurückgesetzt wird, bevor die Wiedergabephase (RSB) auf ihn angewendet wird.

20. Verfahren nach einem der Ansprüche 16 bis 19, **dadurch gekennzeichnet, dass** es eine Überwachung der Ausführung einer Anwendung mit der Bezeichnung überwachte Anwendung (AOP) durchführt, wobei diese Überwachung für mindestens einen Prozess (P1) der überwachten Anwendung gilt und die folgenden Schritte umfasst:
- aus einem bestimmten Zustand der überwachten Anwendung Aufzeichnen (JOP) einer Vielzahl von aufeinander folgenden und zusammenhängenden aufgezeichneten Abfolgen, die eine untersuchte Abfolge innerhalb der Ausführung der überwachten Anwendung bilden;
- Erzeugen einer gesteuerten Abfolge von Wiedergabeschritten (RSB), die eine gesteuerte Ausführung des Rests der aufgezeichneten Abfolgen erzeugen und auf diese Weise eine Wiedergabe der untersuchten Abfolge entsprechend einem gesteuerten Rhythmus ergeben.

21. Verfahren nach einem der Ansprüche 17 bis 20, **dadurch gekennzeichnet, dass** es eine Gewährleistung der Zuverlässigkeit der Funktionsweise einer ersten Anwendung, die als zuverlässig gemachte Anwendung (AOP) bezeichnet wird, vornimmt, welche in mindestens einem Primärknoten mit der Bezeichnung Betriebsknoten (OP) einer Mehrrechnerarchitektur, die Daten austauscht und als Cluster bezeichnet wird, ausgeführt wird, wobei diese Gewährleistung der Zuverlässigkeit eine Rückführung (RES) einer zweiten Anwendung, die als die Bereitschafts-(Standby-)Anwendung (ASB) bezeichnet wird, in einem zweiten Cluster-Knoten, der als Bereitschaftsknoten bezeichnet wird, in einen Zustand, der dem Zustand der zuverlässig gemachten Anwendung an dem Neustartpunkt entspricht, umfasst, wobei die Gewährleistung der Zuverlässigkeit überdies die folgenden Schritte umfasst:
- Aufzeichnen (JOP) der Ausführung der zuverlässig gemachten Anwendung (AOP) ab dem Neustartpunkt und außerhalb des Betriebsknotens (OP) erfolgende Speicherung der aufgezeichneten Ereignisse in mindestens einer Protokolldatei (UL, KL);
- Feststellen einer Störung in dem Betriebsknoten (OP);
- Verwenden der Protokolldatei zur Wiedergabe (RSB) der Ereignisse, die seit dem Neustartpunkt in der zuverlässig gemachten Anwendung (AOP) aufgezeichnet wurden, in der Bereitschaftsanwendung (ASB), um auf diese Weise die Bereitschaftsanwendung in einen Zustand zurückzusetzen, der dem Zustand der zuverlässig gemachten Anwendung nach dem letzten aufgezeichneten Ereignis entspricht.

22. System, das ein Netzwerk aus Rechnern umfasst, die zusammenarbeiten und mindestens einen Knoten (OP, SB) enthalten, der ein Verfahren nach einem der Ansprüche 1 bis 21 durchführt.

23. System nach dem vorhergehenden Anspruch, **dadurch gekennzeichnet, dass** es eine Anwendung (INT) vom Typ Middleware verwendet, um die Funktionsweise von mindestens einer Anwendung (AOP) zu steuern, die in dem Netzwerk ausgeführt wird.

## Revendications

1. Procédé permettant d'exécuter au moins un processus d'application qualifié de cible (PB1) sur un ordinateur (SB), **caractérisé en ce qu'**il procède à une réexécution (RSB), également qualifiée de redémarrage, par ledit processus cible, d'au moins une opération interne qualifiée de journalisée, représentée par des données de journalisation (JSem1 ;fig. 8b), ce procédé comprenant les étapes suivantes :
- exécution, par ce processus cible, d'au moins une instruction de programme, qualifiée d'instruction de réexécution, initiant une opération qualifiée d'opération réexécutée (EVI), correspondant à ladite opération journalisée, et qui retourne audit processus cible (PB1) au moins une donnée de résultats de réexécution (RRJ) représentant un résultat obtenu par ladite opération réexécutée ;
- mise en oeuvre par un agent logiciel (PRI), externe au processus de redémarrage, d'un traitement qualifié de forçage (7), comprenant la prise en compte, par le processus cible, au lieu de la donnée de résultats de réexécution (RRJ), d'une donnée forcée, issue des données de journalisation et représentant, pour l'opération réexécutée, un résultat donné, qualifié de résultat journalisé (RLi).

2. Procédé selon la revendication 1, **caractérisé en ce que** le processus cible (PB1) exécute l'instruction de réexécution de sa propre initiative, par déplacement d'au moins un pointeur d'exécution de programme dans au moins un fichier exécutable (EXE, fig. 7).

3. Procédé selon l'une des revendications 1 ou 2, **caractérisé en ce qu'**il comprend en plus une étape d'interception (META ; fig. 7) de l'instruction de réexécution, ou de l'opération réexécutée (EVI) qu'elle initie.

4. Procédé selon la revendication 3, **caractérisé en ce qu'**il utilise un jeu ordonné, appelé log (UL, JSem1 , fig. 6), de données de journalisation représentant une succession d'opérations journalisées, pour exécuter au moins un processus cible (PB1), en accomplissant une réexécution (RSB) de cette succession d'opérations journalisées.

5. Procédé selon la revendication 4, **caractérisé en ce que** l'étape d'interception (META) comprend de plus une phase de test (5 ; fig. 8b) des données de journalisation (JSem1), pour vérifier si elle contiennent des données de journalisation représentant un résultat journalisé (RLi), dans lequel ledit résultat journalisé correspond à l'opération réexécutée (EVI), l'étape de forçage (7) seule étant accomplie si ledit journal contient un tel résultat journalisé (RLi).

6. Procédé selon l'une des revendications 4 ou 5, **caractérisé en ce que** les opérations réexécutées comprennent, d'une part, des opérations déterministes et, d'autre part, des opérations non déterministes, la phase de forçage (7, fig. 8b) n'étant pas appliquée à au moins l'une desdites opérations déterministes.

7. Procédé selon l'une des revendications 4 à 6, **caractérisé en ce qu'**il utilise un journal (JSem1, UL) représentant la totalité des opérations d'au moins un type donné, exécutées durant l'exécution d'un processus qualifié de journalisé (P1), ce journal étant conçu pour permettre à un processus cible (PB1) d'être exécuté, en accomplissant une réexécution (RSB) dudit processus journalisé.

8. Procédé selon l'une des revendications 4 à 7, **caractérisé en ce qu'**il utilise un journal (JSem1, UL) représentant la totalité des opérations d'au moins un type donné, concernant une ressource (SEM1) donnée, et accompli durant l'exécution d'un processus qualifié de journalisé (P1), ce journal étant conçu pour permettre à un processus cible (PB1) d'être exécuté, en accomplissant une réexécution (RSB) dudit processus journalisé concernant ladite ressource.

9. Procédé selon l'une des revendications 5 à 8, **caractérisé en ce qu'**il effectue une réexécution (RSB), par au moins un processus cible (PB1), de la totalité des évènements internes non déterministes, s'étant produits durant au moins une partie de l'exécution dudit processus journalisé (P1).

10. Procédé selon l'une des revendications 5 à 9, **caractérisé en ce que** l'étape de test (5 ; fog. 8b) du journal (JSem1) concerne la position (SQ) de l'opération réexécutée dans l'exécution du processus cible (PB1), comparé à la position (SQi), dans l'exécution journalisée, de la première opération, non encore réexécutée, pour laquelle le journal (JSem1) contient des données représentant un résultat journalisé (RLi).

11. Procédé selon l'une des revendications 4 à 10, **caractérisé en ce qu'**il utilise un journal (JSem1) représentant la totalité des opérations d'au moins un type donné, appliquées à une ressource partagée, qualifiée de ressource journalisée (SEM1), pour accomplir une réexécution desdites opérations journalisées par au moins un processus cible (PB1, PB2), qualifié de processus de redémarrage, ce processus de redémarrage accédant à une ressource qualifiée de ressource cible (SEM1), correspondant à la ressource journalisée

12. Procédé selon la revendication 11, appliqué à au moins une opération réexécutée par un processus cible (PB2, fig. 8), et comprenant une requête préemptive en attribution d'au moins une ressource cible (SEM1) de type ressource partagée, **caractérisé en ce que** l'étape de forçage comprend les étapes suivantes :
- étape de test (21), vérifiant si le résultat journalisé (id1) de la prochaine opération journalisée (#1) non encore réexécutée pour cette ressource correspond ou ne correspond pas à une attribution audit processus cible (PB2) ;
- si ce test (21) est négatif, maintien du processus cible (PB2) et répéter ledit test, jusqu'à obtention (22) d'un résultat positif.

13. Procédé selon l'une des revendications 3 à 12, **caractérisé en ce que** l'instruction de réexécution comprend un appel à un sous-programme, qualifié d'original (R ; fig. 7), externe au fichier exécutable (EXE), l'étape d'interception (META) comprenant un appel à un sous-programme qualifié de modifié (RM), au lieu dudit sous-programme d'origine, ce sous-programme modifié accomplissant ou initiant le traitement de forçage (7 ; fig. 8b).

14. Procédé selon la revendication 13, **caractérisé en ce que** le sous-programme modifié (RM) comprend au moins une instruction, exécutée dans le système logiciel (SBS), et comprend un appel à au moins un agent logiciel, qualifié de réexécution (PRI), exécutée dans l'espace mémoire utilisateur (SBU) de l'ordinateur du processus cible (PB1, PB2), et la gestion de la mise en oeuvre de la réexécution par le processus cible.

15. Procédé selon l'une des revendications 13 ou 14, **caractérisé en ce que**le sous-programme modifié (RM) comprend une instruction test, pour vérifier si l'instruction l'ayant appelé est ou non exécutée dans le contexte d'une réexécution (RSB), ce test affectant l'appel à l'agent de réexécution (PRI).

16. Procédé selon l'une des revendications 1 à 15, **caractérisé en ce qu'**il accomplit une gestion du fonctionnement d'au moins un processus d'application qualifié de processus journalisé (P1) et comprend les étapes suivantes :
- enregistrement (JOP), et stockage sous la forme de données de journalisation (UL, KL), de données représentant les évènements d'au moins un type donné, s'étant produits durant l'exécution dudit processus journalisé (P1) depuis un point donné, qualifié de point de redémarrage, et jusqu'à un point qualifié d'interruption ;
- à partir d'un processus de redémarrage (PB1), dans un état correspondant à l'état au point de redémarrage du processus journalisé (P1), réexécution (RSB) desdits évènements par ledit processus de redémarrage, à partir desdites données de journalisation (UL, KL), plaçant ainsi le processus de redémarrage en un état correspondant à l'état du processus journalisé, au point d'interruption .

17. Procédé selon la revendication 16, **caractérisé en ce que** les données de journalisation représentent la totalité des évènements d'un ou plusieurs types donnés, qui se produisent dans le processus journalisé (P1) depuis un point donné de son exécution, appelé point de redémarrage, l'étape de réexécution étant appliquée au processus de redémarrage (PB1) à partir d'un état, correspondant à l'état au point de redémarrage, du processus journalisé, la séquence réexécutée rétablissant le processus de redémarrage en un état correspondant à celui du processus journalisé, après la séquence journalisée.

18. Procédé selon l'une des revendications 16 ou 17, **caractérisé en ce que** le processus de redémarrage (PB1) accomplit la réexécution (RSB) d'au moins une séquence journalisée d'évènements internes, en réaction à l'occurrence d'un événement externe, initié par un agent de réexécution externe (PRE ; fig. 5).

19. Procédé selon l'une des revendications 16 à 18, **caractérisé en ce que** l'état du processus journalisé (P1) au point de redémarrage est capturé (CAP) et stocké sous la forme de données de point de redémarrage (EPR), utilisées pour rétablir (RES) le processus de redémarrage en l'état au point de redémarrage, avant application à celui-ci de la phase de réexécution (RSB).

20. Procédé selon l'une des revendications 16 à 19, **caractérisé en ce qu'**il effectue une surveillance de l'exécution d'une application, qualifiée d'application pistée (AOP), cette surveillance s'appliquant à au moins un processus (P1) de l'application pistée et comprenant les étapes suivantes :
- à partir d'un état donné de l'application pistée, la journalisation (JOP) d'une pluralité de séquences journalisées, successives et contiguës, constituant une séquence étudiée au sein de l'exécution de l'application pistée ;
- production d'une succession contrôlée d'étapes de réexécution (RSB), produisant une exécution contrôlée du reste des séquences journalisées, produisant ainsi une réexécution de la séquence étudiée, selon un rythme contrôlé.

21. Procédé selon l'une des revendications 17 à 20, **caractérisé en ce qu'**il accomplit une fiabilisation du fonctionnement d'une première application, qualifiée d'application fiabilisée (AOP), exécutée en au moins un noeud primaire, qualifié de noeud opérationnel (OP), d'une architecture de communication à plusieurs ordinateurs, qualifiée de grappe, cette fiabilisation comprenant un rétablissement (RES), en un état correspondant à l'état de l'application fiabilisée au point de redémarrage, d'une deuxième application, qualifiée d'application de réserve (ASB), dans un deuxième noeud de grappe, qualifié de noeud de réserve, la fiabilisation comprenant en plus les étapes suivantes :
- la journalisation (JOP) de l'exécution de l'application fiabilisée (AOP) depuis le point de redémarrage, et le stockage, hors le noeud opérationnel (OP), d'évènements journalisés, dans au moins un fichier journal (UL, KL) ;
- la détection d'une défaillance dans le noeud opérationnel (OP) ;
- l'utilisation dudit fichier journal pour la réexécution (RSB), dans l'application de réserve (ASB), des évènements journalisés dans l'application fiabilisée (AOP), depuis le point de redémarrage, rétablissant ainsi l'application de réserve en un état correspondant à l'état de l'application fiabilisée après le dernier événement journalisé.

22. Système, comprenant un réseau d'ordinateurs travaillant ensemble er incluant au moins un noeud (OP, SB) mettant en oeuvre un procédé selon l'une des revendications 1 à 21.

23. Système selon la revendication précédente, **caractérisé en ce qu'**il utilise une application (INT) du type logiciel médiateur, pour gérer le fonctionnement d'au moins une application (AOP) exécutée au sein du réseau.
